# EUROPEAN PATENT SPECIFICATION

(11) **EP 1 786 151 B1**
(45) Date of publication and mention of the grant of the patent: **11.04.2012**
(21) Application number: 06017174.1
(22) Date of filing: 17.08.2006
(51) Int. Cl.: H04L 12/28, H04L 12/56

(54) **Network nodes cooperatively routing traffic flow amongst wired and wireless networks**
Zugang zum Internet Basisnetz durch Auswahl eines oder mehrerer Wege über verschiedene Zugangsknoten
Accès au réseau fédérateur Internet par sélection d'un ou plusieurs voies à travers des commutateurs de périphérie différents

(30) Priority: 14.11.2005 US 736889 P; 07.02.2006 US 348632; 07.02.2006 US 349292; 01.03.2006 US 365102; 30.03.2006 US 394253
(43) Date of publication of application: 16.05.2007
(73) Proprietor: Broadcom Corporation, Irvine, CA 92617 (US)
(72) Inventor: Bennett, James D., San Clemente CA 92672 (US)
(74) Representative: Jehle, Volker Armin

(56) References cited:
- EP-A- 1 589 781
- US-A1- 2004 170 181

## Description

### [CROSS-REFERENCE TO RELATED APPLICATIONS/INCORPORATION BY REFERENCE]

This application is a continuation-in-part of the following co-pending applications:

Utility Application Serial No. 11/348,632, filed on February 7, 2006, and entitled "COMMUNICATION DEVICE SUPPORTING BOTH INTERNET AND PUBLIC SWITCHED TELEPHONE NETWORK TELEPHONY";

Utility Application Serial No. 11/349,292, filed on February 7, 2006, and entitled "VOICE COMMUNICATION DEVICE WITH PSTN AND INTERNET PATHWAY ANALYSIS, SELECTION AND HANDOFF'; and

Utility Application Serial No. 11/365,102, filed on March 1, 2006, and entitled "MULTIPLE NODE APPLICATIONS COOPERATIVELY MANAGING A PLURALITY OF PACKET SWITCHED NETWORK PATHWAYS".

This application claims priority to U.S. Provisional Application Serial No 60/736,889, filed November 14, 2005.

This application is related to and filed on even date herewith with Utility Application Serial No. 11/xxx,xxx, entitled "PATHWAYS ANALYSIS AND CONTROL IN PACKET AND CIRCUIT SWITCHED COMMUNICATION NETWORKS".

### [FEDERALLY SPONSORED RESEARCH OR DEVELOPMENT]

[Not Applicable]

### [SEQUENCE LISTING]

[Not Applicable]

### [MICROFICHE/COPYRIGHT REFERENCE]

[Not Applicable]

### BACKGROUND OF THE INVENTION

### 1. Field of the Invention

Various aspects of present invention relate to managing communication flow and routing via a plurality of communication networks; and, more specifically, to manage interaction between end-point devices, access points and other network nodes that service one or more communication applications.

### 2. Description of the Related Art

A computer, video game box, phone, PDA (Personal Digital Assistant) and many other types of terminals may be connected to a communication data network. Each terminal is typically assigned a unique network address by the communication data network. The terminal receives and sends data to the communication data network using the unique network address. The communication data network may be, for example, an EDGE (Enhanced Data Rates for GSM Evolution) network, GSM (Global System for Mobile Communications) network, CDMA (Code Division Multiple Access) network, IEEE (Institute of Electrical and Electronics Engineers) 802.11 network, Bluetooth, WiMax network, Internet, Intranet, satellite network, etc. The data typically exchanged between the terminal and the communication data network comprises media, such as text, audio, video and images, and control signals exchanged with a destination device, e.g., a server or another terminal. Media may be captured and exchanged in real time or from longer term storage.

Some terminals may connect to more than one communication data network to communicate with a destination device. For example, a terminal may have a wireless interface card and a wired interface card to connect to a WiMax network and an Ethernet LAN (Local Area Network), respectively. For a particular software application running on the terminal or for all such applications running during a period of time, the terminal sends and receives data via a selected one of the WiMax or Ethernet networks. The communication data network with which the terminal will exchange data is determined a priori. Before beginning of data exchange, the user of the terminal via a software application running on the terminal configures and selects one of a plurality of available communication data networks, e.g., the WiMax network or the Ethernet LAN, to be used for subsequent data exchange. Once decided, the terminal uses the selected communication data network and corresponding interface card to receive and transmit data.

For a variety of well know reasons, a selected communication data network often begins to exhibit unacceptable performance or goes out of service during data exchange. For example, the terminal typically connects to an access point of the selected communication data network via a wired or wireless link. Loss of service is usually related to the pathway from the terminal through such access point caused by: 1) the terminal moving out of wireless range; 2) disconnected cabling; 3) interference from other terminals; and 4) technical glitches in the access point or terminal hardware and software. Upon experiencing unacceptable performance or service failure during a data exchange, software applications running on the terminal often fail or require termination so that another communication data network can be selected by the user. Such selection often requires configuration of the newly selected communication data network as well. Occurrence of failure of one communication data network and subsequent configuration and switching to another causes significant delay and sometimes loss of data.

Further limitations and disadvantages of conventional and traditional approaches will become apparent to one of ordinary skill in the art through comparison of such systems with various aspects of the present invention.

Microsoft Corp. (EP1589781) discloses criteria-driven methods and a framework that facilitate configuration/selection of one or more wireless network interfaces/networks for carrying out wireless communications on a computing device. The wireless network interface selection and coexistence driver architecture facilitates automated selection of a particular mode of network access based upon status information provided by a set of network interface drivers associated with particular network interfaces and wireless technologies. Furthermore, a criteria-driven interface/network selection framework is potentially invoked in a variety of situations including, but not limited to, when an application is invoked or to select another interface/network to avoid detected interference.

According to the invention, there is provided a communication infrastructure as defined by independent claim 1. Further advantageous features of the invention are defined by the dependent claims.

A device that interacts with a variety of communication data networks and controls exchange of data packets selectively with the variety of communication data networks, substantially as shown in and/or described in connection with at least one of the figures, as set forth more completely in the claims.
According to an aspect of the invention, a communication infrastructure is provided comprising:
a local communication software application having a local communication requirement;
a local management software application;
a local end point device that executes the local communication software application and the local management software application;
a remote end point device having a remote communication characteristic;
a plurality of local access point devices communicatively coupled to the local end point device via a corresponding plurality of independent links, the corresponding plurality of independent links having a corresponding plurality of local pathway characteristics;
a packet switched communication backbone that communicatively couples with each of the plurality of access point devices and the second end point device;
the local end point device communicates through at least one of the plurality of local access points to reach with the remote end point device via the packet switched communication backbone; and
the local end point device selects the at least one of the plurality of local access points after considering the local communication requirement, the remote communication characteristic, and the corresponding plurality of local pathway characteristic.

Advantageously, the communication infrastructure further comprises a remote management software application, running on the remote end point device, which directs the delivery of the remote communication characteristic to the local end point device.
Advantageously, the local communication requirement is delivered by the local communication software application to the local management application.
Advantageously, the selection by the local end point device of the at least one of the plurality of local access points is performed as directed by the local management software application.
Advantageously, the selection by the local end point device of the at least one of the plurality of local access points is performed as directed by the local communication software application.
According to an aspect of the invention, a communication infrastructure is provided that supports a communication software application having a communication characteristic, the communication infrastructure comprising:
a plurality of network nodes comprising a first access point, a second access point, and an end-point node that executes the communication software application;
the end-point node executes a first management application;
the first access point executes a second management application; and
using the communication characteristic and based on interaction between the first management application and the second management application, the first access point is selected to service the communication software application.
Advantageously, the second access point is selected to service the communication software application if the first access point fails to support the communication characteristic.
Advantageously, the communication characteristic is delivered by the first communication software application to the first management application.
Advantageously, the communication characteristic is retrieved from storage by the first management application.
According to an aspect of the invention, a communication infrastructure is provided that supports a communication software application, the communication software application supporting data communication, the communication infrastructure comprising:
a plurality of network nodes comprising a first access point, a second access point, a first end-point node that executes the communication software application, and a second end-point node;
the plurality of network nodes arranged to support multiple communication pathways for the first end-point node; and
the first end-point node executes a management application that, based on requirements of the communication software application, cooperates with at least one other of the plurality of network nodes to choose both a first of the multiple communication pathways via the first access point to service a first portion of the data communication, and a second of the multiple communication pathways via the second access point to service a second portion of the data communication.
Advantageously, the management application retrieves the requirements of the communication software application from storage.
Advantageously, the management application sends the requirements at to the at least one other of the plurality of network nodes.
Advantageously, the management application hands over future choices of both the first and the second of the multiple communication pathways to the communication software application.
Advantageously, the management application monitors the multiple communication pathways.
Advantageously, the requirements of the communication software application is delivered by the communication software application to the management application.
Advantageously, the requirements of the communication software application is retrieved from storage by the management application.
Advantageously, the cooperation by the management application of the end point node comprising passing the choice of both the first and the second of the multiple communication pathways to the communication software.
Advantageously, the cooperation by the management application of the end point node comprising passing the choice of both the first and the second of the multiple communication pathways to at least one other of the plurality of network nodes.
Advantageously, the cooperation by the management application of the end point node comprising passing the choice of both the first and the second of the multiple communication pathways to the first access point.
Advantageously, the management application further cooperates with the at least one other of the plurality of network nodes to choose a third of the multiple communication pathways to replace the first of the multiple communication pathways.
According to an aspect of the invention, a communication infrastructure comprises:
a plurality of communication software applications that each support packet communications, the plurality of communication software applications having a corresponding plurality of communication requirements;
a pathway management application;
a plurality of network nodes comprising a first access point, a second access point, and a first end-point node;
the first end-point node executes the pathway management application and the plurality of communication software applications;
the plurality of network nodes arranged to support multiple communication pathways for the first end-point node; and
the first end-point node, based at least in part on the corresponding plurality of communication requirements, selects a first of the multiple communication pathways and a second of the multiple communication pathways to support the plurality of communication software applications.
Advantageously, the pathway management application retrieves the plurality of communication requirements from the plurality of communication software applications.
Advantageously, the multiple communication pathways having corresponding multiple pathway characteristics; and the first end-point node also considers the corresponding multiple pathway characteristics for the selection.
Advantageously, the first of the multiple communication pathways and the second of the multiple communication pathways both support communication flow involving a first of the plurality of communication software applications.
Advantageously, the plurality of network nodes further comprising a second end-point node that is also involved in the communication flow via the first of the multiple communication pathways and the second of the multiple communication pathways.
Advantageously, the first of the multiple communication pathways supports communication flow involving a first of the plurality of communication software applications and a second of the plurality of communication software applications.
These and other advantages, aspects and novel features of the present invention, as well as details of illustrative aspects thereof, will be more fully understood from the following description and drawings.

### BRIEF DESCRIPTION OF THE DRAWINGS

For various aspects of the present invention to be easily understood and readily practiced, various aspects will now be described, for purposes of illustration and not limitation, in conjunction with the following figures:

FIG. 1 is a schematic block diagram illustrating interaction between a plurality of devices and an Internet backbone via a plurality of access points, each of the plurality of devices interacting with more than one access point in accordance with various aspects of the present invention;

FIG. 2 is a schematic block diagram illustrating a plurality of components of an access point of FIG. 1, the access point supporting a plurality of data paths from the access point to the Internet backbone;

FIG. 3 is a schematic block diagram illustrating a plurality of components of a client device of FIG. 1, the client device supporting a plurality of data paths from the client device to a plurality of access points of FIG. 1;

FIG. 4 is a schematic block diagram illustrating a plurality of software running on a client device, the client device supporting a plurality of data paths from the client device to a plurality of access points;

FIG. 5 is a schematic block diagram illustrating a plurality of software running on an access point, the access point supporting a first plurality of data paths from the access point to a plurality of client devices and supporting a second plurality of data paths from the access point to a packet switched network;

FIG. 6 is a flow chart illustrating functions performed by protocol layers of a computing device that is running a communication application without multi-path management capability and supporting a plurality of pathways between the computing device and Internet;

FIG. 7 is a flow chart illustrating a method of managing a plurality of communication pathways between a computing device and at least one packet data network by a communication application that is running on the computing device;

FIG. 8 is a flow chart illustrating a method of managing a plurality of communication pathways between a computing device and at least one packet data network by a multi-path management software with support from a communication application, the multi-path management software running on the computing device;

FIG. 9 is a flow chart illustrating a method of independently managing a plurality of communication pathways between a computing device and at least one packet data network by a multi-path management software that is running on the computing device; and

FIG. 10 is a schematic and functional block diagram illustrating exemplary pathway selections made by multi-path management software (MMS) in accordance with the present invention.

### DETAILED DESCRIPTION

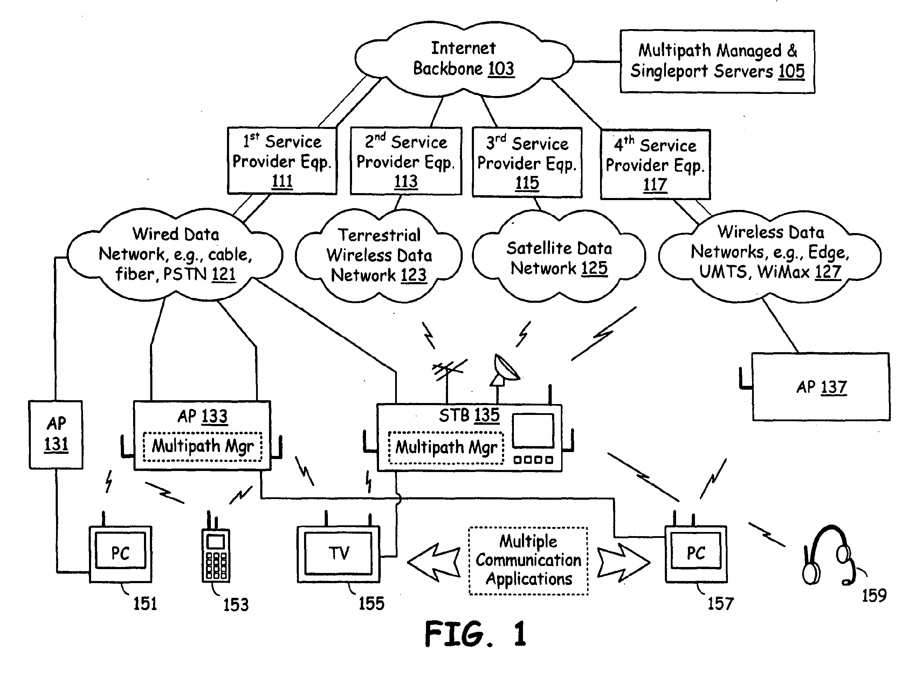

FIG. 1 is a schematic block diagram illustrating interaction between a plurality of devices, 151, 153, 155, 157 and 159 and an Internet backbone 103 via a plurality of access points 131, 133, 135 and 137, each of the plurality of devices 151, 153, 155, 157 and 159 interacting with more than one access point. A first personal computer 151, a phone 153, a television 155, a second personal computer 157 and a headset 159 interact with the Internet backbone 103. First service provider equipment 111, second service provider equipment 113, third service provider equipment 115, and fourth service provider equipment 117 are communicatively connected to the Internet backbone 103. Each of the plurality of service provider equipments 111, 113, 115 and 117 may be one or combination of a computing device, router, switch, base station, antenna, transceivers domain name server, proxy server, storage server, for example. Each of the plurality of service provider equipments 111, 113, 115 and 117 are communicatively coupled to the Internet backbone 103 via wired (including fiber) and/or wireless links.

The first service provider equipment 111 manages a wired data network 121. The wired data network 121 may be one or combination of a PSTN network, a fiber network and a cable network. A first access point 131, a second access point 133 and a third access point, i.e., a set top box 135, are communicatively connected to the wired data network 121. The second service provider equipment 113 manages a terrestrial wireless data network 123. The terrestrial wireless data network 123 may be a television broadcast network involving UHF (Ultra-High Frequency) or VHF (Very High Frequency) transmissions, for example. The set top box 135 is communicatively connected to the terrestrial wireless data network 123. The third service provider equipment 115 manages a satellite data network 125. The set top box 135 communicates with the satellite data network 125 using a dish antenna. The fourth service provider equipment 117 manages a wireless data network 127. The wireless data network 127 may be an EDGE network, WCDMA (Wideband Code Division Multiple Access) network, IEEE 802.11 network, WiMax network, or UMTS (Universal Mobile Telecommunications System) network, for example. The set top box 135 is also adapted to communicate with the wireless data network 127. A fourth access point 137 is communicatively connected to the wireless data network 127. Each of the access points 131, 133, 135 and 137 comprises at least one (typically two or more) transceiver that receives and transmits data. The first access point 131 receives data from the first personal computer 151 and sends the received data to the wired data network 121. The first access point 131 also receives data from the wired data network 121 and sends the data to the first personal computer 151. The data may comprise control information, supporting data, and varieties of multimedia such as text message, audio, video, picture, email, television content, music video, or file, and is exchanged with another network device, such as an Internet server, broadcasting equipment or another terminal.

The first personal computer 151 is connected to the first access point 131 via a wired interface and connected to the second access point 133 via a wireless interface. The first personal computer 151 is thus capable of receiving and sending data to the wired data network 121 either via the first access point 131 or via the second access point 133. The first access point 131 assigns a first IP address to the first personal computer 151 and the second access point assigns a second IP address to the first personal computer 151. The phone 153 is communicatively connected with the second AP via two wireless links. The television 155 is communicatively connected to the second AP 133 via a wireless link. The second personal computer 157 is communicatively connected to the second AP 133 via a wired link. The second AP 133 is connected to the wired data network 121 via two wired links, a first wired link and a second wired link.

As illustrated, each terminal has many possible available communication pathways to any other terminal, server or other network device. The first personal computer 151 has two upstream pathways via the AP 131 and 133. The telephone 133 has two upstream pathways, both via the AP 133, and the television 155 and the personal computer 157 each have two. To manage communication among the available plurality of upstream pathways, each of the terminals 151-157 employ multi-path management functionality through a combination of general and/or specific purpose hardware and associated software. Similarly, the access point 133 and the set top box 135 both have two or more upstream communication pathways through which other terminals, servers and other network devices can be reached, and two or more downstream communication pathways. To manage communication among the available plurality of upstream and downstream pathways, the access point 133 and the set top box 135 also employ multi-path management functionality through a combination of general and/or specific purpose hardware and associated software. Likewise, any other network device having two or more upstream or two or more downstream pathways, such as some of the servers 105, may utilize the multi-path management functionality.

As used herein, "upstream pathway" and "downstream pathway" do not refer to actual direction of data flow. Instead, "upstream pathway" refers to a pathway from the present device that communicatively couples with the Internet backbone 103, while "downstream pathway" refers to a pathway from the present device toward an end-point device. Thus, for example, the access point 133 has two upstream pathways (both relevant to the personal computer 151) and three downstream pathways (only one relevant to the personal computer 151). An "end point node" or "end point device" as used herein refers to any network device that is the original source or destination of a communication flow, such as a client device or a server.

Specifically, each network device having multiple upstream and/or multiple downstream pathways executes a multi-path management software application. Thus, in available pathways between two end-point devices, there may be one or a plurality of multi-path management applications running. Where there is only one, the multi-path management application operates to select from among the available upstream and downstream pathways to support the exchange between the two end-point devices. This selection may involve one or more upstream pathways and/or one or more downstream pathways. Others of the upstream and downstream pathways may be maintained in an inactive state, or used to support other end-point device exchanges. Also, some pathways may be support pluralities of end-point device exchanges taking place at the same time.

When a plurality of multi-path applications exist in an overall pathway between two end-point devices, each will operate pursuant to local settings. For example, depending on the network configuration and local settings and with or without support from any upstream multi-path application, each multi-path management application may independently manage its upstream pathways but not downstream. Alternatively, based on settings, all or a portion of the overall management process can be centralized to one multi-path application with the others entering a dormant state or taking on a supporting role. Likewise, all or some of the multi-path management applications may operate in concert to manage a data exchange between any two end-point devices.

Pathway selection may be performed, for example: 1) upon powering up an end-point device; 2) as pathway characteristics change; 3) as pathways change or become available; 4) as demands change; 5) periodically or continuously; 6) as the communication requirements of local or remote communication software applications change, etc. Selection may be for all communication involving, for example: a) the end-point device; b) a particular communication software application; c) a particular media type; and/or d) on a request by request basis.

As an example, the first personal computer 151 (or a user using the first personal computer 151) desires to send (upstream) data to a destination terminal connected to the Internet backbone 103. The first personal computer 151 is associated with the first access point 131 through the first IP address and is associated with the second access point 133 through the second IP address. The multi-path management application running on the first personal computer 151 evaluates and chooses one or both of the two available upstream pathways to conduct one or ongoing communication exchanges. Alternatively, if so configured, the multi-path management application running on the first personal computer 151 might merely evaluate (or assist in evaluating) the two available upstream pathways and send related information and results to the first service provider equipment 111. Multi-path management functionality performed by the first service provider equipment 111 responds by evaluating the received information and results and, based thereon, instructs the first personal computer 151 to use the second IP address and the wireless interface to communicate with the wired data network 121.

For the phone 133, multi-path management software running on the phone 133, the access point 133 and the first service provider equipment 111 could be similarly act independently or in concert in the selection process. For example, the second access point 133 exchanges data with the phone 133 via a link selected by the multi-path management software running on the phone 133, and the second access point 133 exchanges data with the first service provider equipment 111 pursuant to instructions from the multi-path management software running on the first service provider equipment 111. Many other variations are contemplated, such as differing pathways based on data flow, e.g., pathways from a first end-point device to a second might involve different multi-path management responsibilities and resulting pathway selection than that from the second end-point device to the first. The pathway from the first end-point device to the second might involve each device making its own, independent assessment and selection of one or more of its links that lead to the second end-point device. Likewise, in the pathway from the second end-point device to the first, each device may only make its own, independent assessment and selection of one or more of its links that lead to the first end-point device.

When responsible to do so, a multi-path management application evaluates a plurality of characteristics for each available upstream and downstream link. Based on such characteristics, the multi-path management application generates a link rating for each link that comprises one or more factors. By comparing the one or more factors of the first and second link ratings, the multi-path management application can determine which of the available links in a pathway to use.

The plurality of characteristics may include maximum and current bandwidth, loading, queue backlogs, competing demands, data types, interference, error rates, security, link billing costs, etc. In particular, some of the pluralities of characteristics are time invariant and others vary with time. For example, those that vary over time may do so because of changes in bandwidth, pathway routing, network load, QoS (Quality of Service), transmission power requirements, error rate, roaming, etc. Some characteristics that may not vary over time include, for example, link billing costs, maximum bandwidth, QoS guarantees, robustness of a link against eavesdropping, circuit vs. packet switched characteristics, etc.

After an initial evaluation and selection of a link between the AP 133 and the phone 153, the multi-path management application program running on the AP 133 may reevaluate its decision at regular intervals, new demands are placed on the link, and whenever another change occurs that exceeds some preset threshold. If a more appropriate configuration is warranted, the multi-path management application will direct link changes in accommodation. This may happen, for example, due to an increase in amount of data required by the television 155 that opens a second window to display a second video stream, or due to another data exchange ending and freeing up a more desirable link path. Alternatively, a large amount of data may be waiting at the first personal computer 151 for upstream delivery at a subsequent instant of time. Using a currently active link for such delivery may place immediate loading on the link that exceeds an acceptable bandwidth for another use of the same link. In response, the multi-path management application program might direct a rerouting of such other use or of all or a portion of the delivery burden of the large amount of data.

The multi-path management application program seamlessly switches data transportation from one link to another with or without end-point device and/or end-point communication application software being notified. For example, the first personal computer 151 may be unaware of the wired link via which the second AP 133 carries data generated by the first PC 151 to the wired data network 121. The television 155 and the second PC 157 may also be kept unaware of the switching performed by the multi-path management application program. The switching of data transportation along the second wired link to that along the first wired link does not hamper flow of data, generated by the television 155 and/or data generated by the second PC 157, via the second AP 133.

The second PC 157 is associated with the second AP 133, the set top box 135 and the fourth AP 137. The second PC 157 comprises a wired interface, a first wireless interface and a second wireless interface. The second AP 133 assigns a third IP address to the second PC 157. The set top box 135 assigns a fourth IP address to the second PC 157. The fourth AP 137 assigns a fifth IP address to the second PC 157. The second PC 157 communicates with the wired data network 121 via the second AP 133 and using the third IP address and the wired interface. The second PC 157 communicates with the set top box 135 using the fourth IP address and the first wireless interface. The second PC 157 communicates with the fourth AP 137 using the fifth IP address and the second wireless interface. A second multi-path management program is running on the second PC 157. The second multi-path management program is a piece of software that manages three communication associations, first association with the second AP 133, second association with the set top box 135 and third association with the fourth AP 137. The second multi-path management program collects a plurality of characteristics or parameters related to the three communication associations periodically. The second multi-path management program may collect the plurality of parameters whenever a change occurs in any of the three communication associations. The plurality of parameters may include, IP address of each of the three associations, data traffic carried by each of the associations, bandwidth offered by each of the associations, encryption and encoding supported by each of the associations, power requirement on each of the associations, type of each of the associations, latency introduced by each of the associations, interference level in each of the associations which may be dependent on the data traffic carried by each of the associations, etc. The second multi-path management program stores the plurality of collected parameters in a memory of the second PC 157. In a second embodiment, the second multi-path management program updates the plurality of parameters with a new set of collected plurality of parameters and forgets old set of plurality of parameters. In the second embodiment the multi-path management program causes the old set of plurality of parameters to be stored in a storage system until the new set of plurality of parameters is collected.

The second PC 157 or a user using the second PC 157 desires to send data to a destination device connected to the Internet backbone 103. The second PC 157 generates a request for data transmission. In response to the request, the second multi-path management program retrieves the plurality of parameters related to the three communication associations. The second multi-path management program may collect at least some of the plurality of parameters, for example, the bandwidth offered by each of the associations, the encryption and encoding supported by each of the associations, the latency introduced by each of the associations, the interference level in each of the associations etc. from the second access point 133, the set top box 135 and the fourth access point 137. The plurality of parameters may be retrieved from the memory of the second PC 157. The plurality of parameters may be retrieved from a separate storage system that is not housed with the second PC 157. Some or all of the plurality of parameters, for example, the IP addresses corresponding to each of the associations may be retrieved from the wired interface, the first wireless interface and the second wireless interface of the second PC 157. The multi-path management program selects an interface from the three interfaces, the wired interface, the first wireless interface and the second wireless interface using the plurality of retrieved parameters and directs the second PC 157 to send (i.e., upstream) data to the Internet backbone 103 using the selected interface and corresponding IP address. The multi-path management program performs the selection to render best possible service to data up streaming process. As an example, the multi-path management program selects the second wireless interface. The second PC 157 uses the fifth IP address assigned by the fourth access point 137 to send data to the fourth access point 137. The data is received by the fourth access point 137 and sent to the destination device using the wireless data network 127.

Wireless link between the fourth access point 137 and the second wireless interface of the second PC 157 may go down while the second PC 157 is sending to and/or receiving data from the fourth access point. If the wireless link goes down, then the software application program directs the second PC 157 to use one of the remaining two interfaces, i.e., the wired interface and the first wireless interface. The software application program selects the one interface that provides better service. The selection of the one interface from the remaining two interfaces depends on the plurality of retrieved parameters. As an example the software application program selects the wired interface. The second PC 157 uses the wired interface and the third IP address to send the data. The change of interface from the second wireless interface to the wired interface is performed seamlessly so that no data sent by the second PC 157 gets lost. The data sent by the second PC 157 reaches the second AP 133. The second AP 133 is connected to the wired data network 121 via two links. The multi-path management application program that is running on the second AP 133 selects one of the two links to the wired data network 121 for sending the data received from the second PC 157 to the wired data network 121. The second AP 133 sends the data received from the second PC 157 to the wired data network using the selected link. The data sent by the second PC 157 eventually reaches the destination node via the second AP 133, the wired data network 121 and the Internet backbone 103.

In yet another embodiment, the second multi-path management program running on the second PC 157 retrieves the plurality of parameters corresponding to all the three associations periodically. The multi-path management program may choose a threshold value and whenever quality of any one of the three associations goes below the threshold value, the multi-path management program quarantines the corresponding association. In this exemplary case, the second PC 157 uses the wireless link between the fourth access point 137 and the second wireless interface of the second PC 157 to send data. As quality of the wireless link goes below the threshold value, the multi-path application program may prompt the second PC 157 to switch to the wired interface and use the third IP address for sending data. Switching from the second wireless interface to the wired interface thus happens before the wireless link goes down. The multi-path management program guarantees that no data (i.e., data packet sent by the second PC 157) is lost due to the switching.

One or more communication applications are running on each of the terminals 151-157. Communication applications may be Internet browsing application, Internet telephony, video gaming application, text messaging, multimedia messaging, and video conferencing. Each of these communication applications demands different communication requirements. For example, the Internet browsing application may require a high bandwidth pathway, the Internet telephony application may require a low latency pathway, the text messaging application may typically tolerate a high latency pathway and the video gaming application that delivers a real time experience to a user may need a high bandwidth and low latency pathway. The communication applications running on the terminals 151-157 may perform the multi-path management functionality. In such case there may not be a separate multi-path management hardware or software that manages communication among the available plurality of upstream pathways from each of the terminals 151-157. The communication application running on a terminal may select an upstream pathway from among two or more available upstream pathways based on corresponding communication requirement. As an example, if a terminal has two upstream pathways to an access point, a low bandwidth and a high bandwidth pathway then a video gaming application running on the terminal may decide to use the high bandwidth upstream pathway for sending and receiving packet data from the access point. The video gaming application (the communication application) informs a multi-path management application running on the terminal about the decision and the multi-path management application sends and receives the packet data from the access point via the decided high bandwidth pathway. The multi-path management application merely helps in directing the data packets to the access point via the pathway that is selected by the video gaming application (the communication application).

In another embodiment there is no multi-path management application running on the terminal. The communication application (the video gaming application) is communicatively coupled to device driver of the terminal and directs the device driver corresponding to the selected pathway (the high bandwidth pathway) to send and receive the packet data from the access point.

The video gaming application (the communication application) may alternately decide to use the high bandwidth upstream pathway for receiving packet data from the access point and to use the low bandwidth upstream pathway to send packet data to the access point. The video gaming application may additionally decide to simultaneously use the high bandwidth upstream pathway and the low bandwidth upstream pathway for receiving packet data from the access point. The video gaming application needs a low latency pathway. The video gaming application may decide to communicate with the access point using only the low bandwidth pathway at an instance of time if the high bandwidth pathway experiences a delay more than a permissible value at the instance of time. The video gaming application directs either the multi-path management application or the corresponding device driver to switch over to the low bandwidth pathway. The communication application software guarantees that no packet data is lost packet data is lost due to the switching.

The communication application selects an upstream pathway from two or more available upstream pathways depending on communication characteristics of the available pathways. The communication characteristics may include maximum and current bandwidth, loading, queue backlogs, interference, error rates, security, link billing costs, transmission power requirements etc. The communication application performs the selection based on data types generated by the communication application. If the communication application requires exchange of control data, it may select only one of the available upstream pathways. If the communication application requires to send and receive multimedia packet data, it may select best two from the available upstream pathways and receive (or send) a portion of the multimedia packet data using first of the two selected pathways and receive (or send) rest portion of the multimedia packet data using second of the two selected pathways.

In one embodiment a particular communication application may have higher priority over other communication applications. For example and without limitation, the phone 153 has two upstream pathways to the AP 133. An Internet browsing application that runs on the phone 153 has a lower priority than a phone call application. The Internet browsing application that is running on the phone 153 selects and uses one of the two upstream pathways to communicate with the AP 133. As an example the selected pathway offers lower interference among the two upstream pathways. If now the phone 153 (or a user using the phone 153) desires to set up a simultaneous telephone call, then the Internet browsing application releases the lower interference upstream pathway and instead uses second one of the two upstream pathways that offer higher interference for communicating with the AP 133. The phone call application uses the lower interference pathway for communicating with the AP 133. Packet data that belongs to the Internet browsing application flow over the higher interference pathway and packet data that belongs to the phone call application flow over the lower interference pathway. Once the phone call application ends, the Internet browsing application switches over to the lower interference pathway and exchanges packet data via the lower interference pathway. The switching of Internet browsing application from the lower interference pathway to the higher interference pathway and back to the lower interference pathway is performed seamlessly by the Internet browsing application.

In yet another embodiment the communication applications, the Internet browsing application and the phone call application running on the phone 153 may not be adapted to select a pathway from the two upstream pathways to the AP 133. A multi-path management application is running on the phone 153. The communication applications supply communication requirement information (CRI) corresponding to the communication applications to the multi-path management application and the multi-path management application selects a pathway from the two upstream pathways using the CRI. The CRI corresponding to a communication application may include minimum data rate required by the communication application, priority level of the communication application, maximum error rate tolerated by the communication application etc. As an example the user desires to run Internet browsing application on the phone 153. The multi-path management application running on the phone 153 receives a pathway set up request from the Internet browsing application. The multi-path management application subsequently receives CRI corresponding to the Internet browsing application from the Internet browsing application. The multi-path management application may alternatively retrieve the CRI from a memory of the phone 153. The multi-path management application selects one of the two upstream pathways using the CRI and directs subsequent packet data flow between the AP 133 and the phone 153 via the selected pathway.

The AP 133 receives a phone call set up request to the phone 153 from a terminal that is connected to the Internet backbone 103. The AP 133 is communicatively connected to the phone 153 via the selected pathway over which the packet data corresponding to the Internet browsing application are flowing. The AP 133 uses the selected pathway to send a call set up request to the phone 153. The multi-path management application retrieves the CRI corresponding to the phone call application. The CRI corresponding to the phone call application for example reveals that the phone call application has a higher priority than the Internet browsing application. The multi-path management application uses the CRI corresponding to the phone call application to select a pathway from the two available upstream pathways to the AP 133. As an example the multi-path management application determines that the selected pathway that the Internet browsing application is using is best suited for the phone call application also. Since the phone call application has a higher priority over the Internet browsing application, the multi-path management application switches the packet data corresponding to the Internet browsing application to second one of the two upstream pathways and directs the packet data corresponding to the phone call application via the selected pathway. The communication applications i.e., the Internet browsing application and the phone call application help the multi-path management application to chose a pathway from two or more available pathways by providing corresponding CRI to the multi-path management application.

In a third type of embodiment the communication applications running on a terminal (151-157) may not contribute either directly or indirectly to selection of a pathway from two or more available upstream pathways. The selection of a pathway and directing packet data flow over the selected pathway is performed by the multi-path management application running on the terminal. The pathway selection may be performed jointly by more than one multi-path management applications running on different terminals between originating terminal and destination terminal. As an example the multi-path management application running on the phone 153, a second multi-path management application running on the AP 133 and a third multi-path management application running on the first service provider equipment 111 may jointly decide to use a pathway from the two upstream pathways between the phone 153 and the AP 133 on receiving a pathway set up request from a communication application (i.e., the phone call application or the Internet browsing application). Communication application running on the terminal (151-157) is oblivious to communication pathway selected by one or more multi-path management applications.

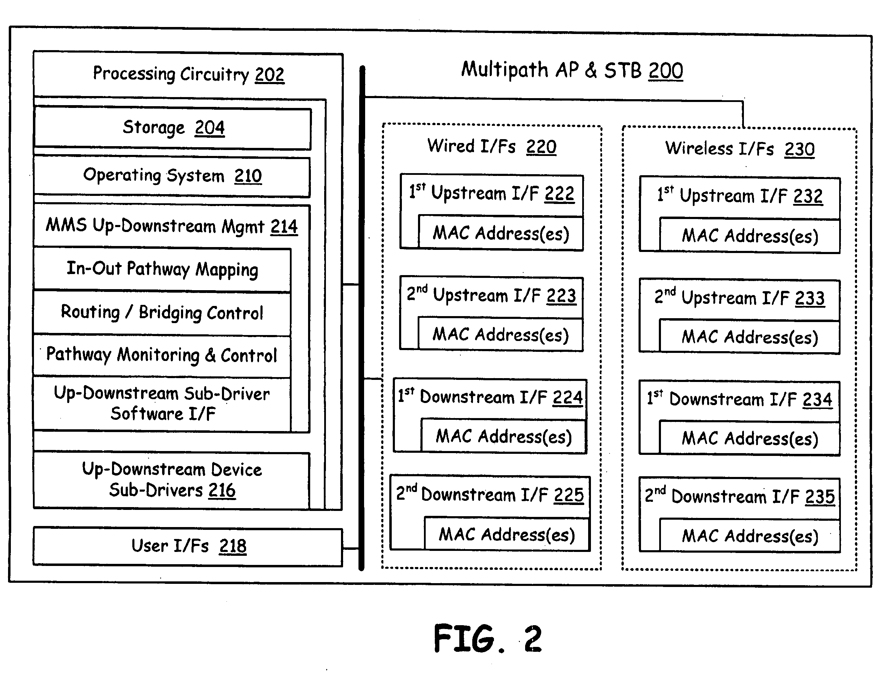

FIG. 2 is a schematic block diagram illustrating a plurality of components of an access point 133 of FIG. 1, the access point 133 supporting a plurality of data paths from the access point 133 to the Internet backbone 103. The set top box 135 of FIG. 1 also supports more than one data communication pathway from the set top box 135 to the Internet backbone 103. FIG. 2 illustrates the plurality of components that are common to the multi-path access point 133 and the multi-path set top box 135 of FIG. 1. The multi-path AP or the multi-path STB (set top box) 200 comprises a processing circuitry 202, a user input interface 218, a plurality of wired interfaces 220 and a plurality of wireless interfaces 230. The processing circuitry 202 comprises a storage system 204, an operating system 210, a multi-path management software (MMS) 214 and a device sub-driver 216. The user input interface 218 receives an input from a user and the processing circuitry 202 responds to the input accordingly. The user input interface 218 may be a plurality of buttons, a touch screen, a voice based interface, a mouse, a thumbwheel, a screen and a pen, etc. The plurality of wired interfaces 220 comprise a first wired upstream interface 222, a second wired upstream interface 223, a first wired downstream interface 224 and a second wired downstream interface 225. The plurality of wireless interfaces 230 comprise a first wireless upstream interface 232, a second wireless upstream interface 233, a first wireless downstream interface 234 and a second wireless downstream interface 235. The upstream interfaces (wired upstream and wireless upstream interfaces) of the multi-path AP (or the multi-path STB) 200 support data communication between the multi-path AP (or the multi-path STB) 200 to one or more data networks and the downstream interfaces (wired downstream and wireless downstream interfaces) support data communication between the multi-path AP (or the multi-path STB) 200 and one or more client devices. A client device is a terminal and/or equipment that generates data. Typical examples of the client device are a personal computer, a phone, a PDA, a video game box, a television or any of a variety of terminals that generates data in a first format (e.g., data fragmented into packets) that can be transported across a packet switched network. The data may be an audio, a video, a picture, an email, a web page, a music video, a file stored in an Internet and/or Intranet server, a text message, a television program and any of a variety of multimedia information. Typical examples of a data network are a fiber data network, a cable data network, a public switched telephone network, a GSM network, a CDMA network, an EDGE network, an IEEE 802.11 network, a WiMax network, a satellite data network or any of a variety of standard or proprietary packet switched network.

For example and without limitation the multi-path AP (or the multi-path STB) 200 communicates with a fiber data network using the first upstream wired interface 222, with a cable data network using the second upstream wired interface 223, with an EDGE network using the first upstream wireless interface 232 and with a WiMax network using the second upstream wireless interface 233. The fiber data network, the cable data network, the EDGE network and the WiMax network use different protocols for packet data transmission and reception. Each of the wired and wireless upstream interfaces (222, 223, 232 and 233) interacts with at least a corresponding hardware device, and the corresponding hardware device is uniquely identified by a medium access control (MAC) address. The corresponding hardware device typically comprises a transceiver. The multi-path AP (or the multi-path STB) 200 associates itself with the fiber data network, the cable data network, the EDGE network and the WiMax network prior to communicating with these networks. Association includes assignment of an IP address by the corresponding data communication network to the multi-path AP (or the multi-path STB) 200. The multi-path AP (or the multi-path STB) 200 is assigned a first IP address by the fiber data network, a second IP address by the cable data network, a third IP address by the EDGE network and a fourth IP address by the WiMax network during the association. The multi-path AP (or the multi-path STB) 200 communicates with the fiber data network via the first upstream wired interface 222 using the first IP address. Similarly the multi-path AP (or the multi-path STB) 200 communicates with the cable data network via the second upstream wired interface 223 using the second IP address, with the EDGE network via the first upstream wireless interface 232 using the third IP address and with the WiMax network via the second upstream interface 233 using the fourth IP address.

In this non limiting example, the multi-path AP (or the multi-path STB) 200 communicates with a personal computer using the a first wired downstream interface 224, with a headset using the second wired downstream interface 225, with a phone using the first wireless downstream interface 234 and with a television using the second wireless downstream interface 235. The multi-path AP (or the multi-path STB) 200 in this exemplary case is connected to a heterogeneous type of packet data networks (i.e., the fiber data network, the cable data network, the EDGE network and the WiMax network). The type of packet data networks to which the multi-path AP (or the multi-path STB) 200 is communicatively connected is kept hidden from the personal computer, the headset, the phone and the television (i.e., the client devices). The MMS 214 of the multi-path AP (or the multi-path STB) 200 assigns a fifth IP address, a sixth IP address, a seventh IP address and a eighth IP address respectively to the personal computer, the headset, the phone and the television when these client devices broadcast an association request. The MMS 214 of the multi-path AP (or the multi-path STB) 200 directs the personal computer to send data in a first format to the multi-path AP (or the multi-path STB) 200 using the fifth IP address. The multi-path AP (or the multi-path STB) 200 receives the data in the first format from the personal computer via the first wired downstream interface 224.

The multi-path AP (or the multi-path STB) 200 is communicatively connected to the Internet backbone via the first wired upstream interface 222, the second wired upstream interface 223, the first wireless upstream interface 232 and the second wireless upstream interface 233. The MMS 214 evaluates a first metric corresponding to the first wired upstream interface 222, a second metric corresponding to the second wired upstream interface 223, a third metric corresponding to the first wireless upstream interface 232 and a fourth metric corresponding to the second wireless upstream interface 233. The first metric at an instant of time may depend on a plurality of parameters. The plurality of parameters may be maximum bandwidth the first wired upstream interface 222 supports, data load that is waiting to be up streamed from the client devices (the personal computer, the headset, the phone and the television) to the Internet backbone via the multi-path AP (or the multi-path STB) 200, amount of data traveling via the first wired upstream interface 222 at the instant of time, type of the data load waiting to be up streamed via the multi-path AP (or the multi-path STB) 200 (i.e., if the data load to be up streamed is a text message, a video file, a real time data, a non real time data etc.) and power requirement of the first wired upstream interface 222. The first metric is a time varying parameter. The MMS 214 evaluates the first metric at regular intervals. The second metric, the third metric and the fourth metric corresponding to respectively the second wired upstream interface 223, the first wireless upstream interface 232 and the second wireless upstream interface 233 are time varying parameters. The MMS 214 evaluates the second metric, the third metric and the fourth metric at regular intervals. The MMS 214 may evaluate the first metric, the second metric, the third metric and the fourth metric in response to a data upstream request from any one of client devices (the personal computer, the headset, the phone or the television). The MMS 214 may evaluate the first metric, the second metric, the third metric and the fourth metric in response to an user input received via the user input interface 218 of the multi-path AP (or the multi-path STB) 200. The MMS 214 stores the first metric, the second metric, the third metric and the fourth metric in the storage system 204 of the multi-path AP (or the multi-path STB) 200. The MMS 214 updates the stored value of the first metric, the second metric, the third metric and the fourth metric whenever the MMS 214 evaluates a new set of metric values.

The MMS 214 may collect the plurality of parameters on which the metric values (the first metric, the second metric, the third metric and the fourth metric) depend, from the plurality of wired interfaces 220, the plurality of wireless interfaces 230, the operating system 210, the storage system 204 and the client devices (the computer, the headset, the phone, the television). In this exemplary case, the device sub-driver 216 of the multi-path AP (or the multi-path STB) 200 senses presence of data, which has come from the personal computer, at the first wired downstream interface 224. The device sub driver 216 informs the MMS 214 about the presence of the data. Subsequently the MMS 214 of the multi-path AP (or the multi-path STB) 200 evaluates the four metric values. The evaluation of the four metric values is performed by the MMS such that better a data communication link, higher is the corresponding metric value. In this non-limiting example, the second metric may have the highest value among the four metric values. The second metric corresponds to the second wired upstream interface 223 of the multi-path AP (or the multi-path STB) 200. The MMS 214 of the multi-path AP (or the multi-path STB) 200 directs the device sub-driver 216 to route the data received from the personal computer through the second wired upstream interface 223 of the multi-path AP (or the multi-path STB) 200. The device sub-driver 216 is a software program that interacts with hardware of the first wired downstream interface 224 and hardware of the second upstream wired interface 223. The device sub-driver 216 directs the data available at the first wired downstream interface 224 (i.e., data that has come from the personal computer) to the second upstream wired interface 223. The second upstream wired interface 223 sends the data to the cable data network using the second IP address. The data eventually reaches the Internet backbone via the cable data network.

In another embodiment an identifier may accompany the packet data, which comes from the personal computer at the first wired downstream interface 224. The identifier identifies that the packet data is of high priority value. In such a case the MMS 214 of the multi-path AP (or the multi-path STB) 200 may evaluate the four metric values and identify two communication interfaces that correspond to metrics of two higher values. In this non-limiting example, the second metric may have highest value among the four metric values and the first metric may have second highest value among the four metric values. The second metric corresponds to the second wired upstream interface 223 of the multi-path AP (or the multi-path STB) 200. The first metric corresponds to the first wired upstream interface 222 of the multi-path AP (or the multi-path STB) 200. The MMS 214 of the multi-path AP (or the multi-path STB) 200 divides the packet data received from the personal computer into two portions. The MMS 214 decides to route a first portion of the packet data received from the personal computer through the second wired upstream interface 223 and remaining portion of the packet data through the first wired upstream interface 222. Device sub-drivers 216 that interact with hardware of the first wired upstream interface 222 and hardware of the second wired upstream interface 223 perform the routing of data packets under supervision of the MMS 214. The second wired interface 223 is communicatively connected to the cable data network. The MMS 214 ensures that the first portion of the data packets that are routed via the second wired interface 223 is adapted to the cable data network protocol. The first wired interface 222 is communicatively connected to the fiber data network. The MMS 214 ensures that the remaining portion of the data packets that are routed via the first wired interface 222 is adapted to the fiber data network protocol. The packet data that reaches the multi-path AP (or the multi-path STB) 200 from the personal computer eventually reaches the Internet backbone, the first portion via the cable data network and the remaining portion via the fiber data network.

The personal computer is not aware of type of the data network and/or interface the multi-path AP (or the multi-path STB) 200 uses to send the data, which the multi-path AP (or the multi-path STB) 200 receives from the personal computer. The personal computer sends the data to the multi-path AP (or the multi-path STB) 200 in the first format prescribed by the multi-path AP (or the multi-path STB) 200. As an example the MMS 214 of the multi-path AP (or the multi-path STB) 200 selects the second upstream wired interface 223. The data received from the personal computer in the first format may have to be transcoded to a second format that is supported by the cable data network. The MMS 214 triggers the device sub-driver 216 to route the data available at the first wired downstream interface 224 (i.e., data that has come from the personal computer) to a transcoder. The transcoder is a constituent of the processing circuitry 202 of the multi-path AP (or the multi-path STB) 200. The transcoder converts the data in the first format to the second format. The MMS 214 further triggers the device sub-driver 216 to route the data in the second format from the transcoder to the second upstream wired interface 223. The second upstream wired interface 223 sends the data in the second format to the cable data network using the second IP address. The second upstream wired interface 223 comprises a transmission radio.

The MMS obtains the plurality of parameters and evaluates the four metric values periodically. The user using the user input interface 218 may set time interval between two consecutive metric evaluations by the MMS 214. The user input interface 218 receives a user defined time interval value and forwards the time interval value to the MMS 214. The MMS 214 stores the time interval value in the storage system 204 and evaluates the four metric values once in the user defmed time interval. If at an instant of time the third metric value exceeds the second metric value, then the MMS 214 triggers the device sub-driver 216 to route the data received from the personal computer through the first wireless upstream interface 232 as the third metric corresponds to the first wireless upstream interface 232. The device sub-driver 216 directs the data available at the first wired downstream interface 224 (i.e., data that has come from the personal computer) to the first wireless upstream interface 232. The first wireless upstream interface 232 sends the data to the EDGE network using the third IP address. The data eventually reaches the Internet backbone via the EDGE network. The data, which was following the first wired downstream interface 224 to the second upstream wired interface 223 path, now after switching by the MMS 214, follows the first wired downstream interface 224 to the first wireless upstream interface 232 path. The MMS 214 controls switching of the data route such that no data (or data packets) is lost during switching.

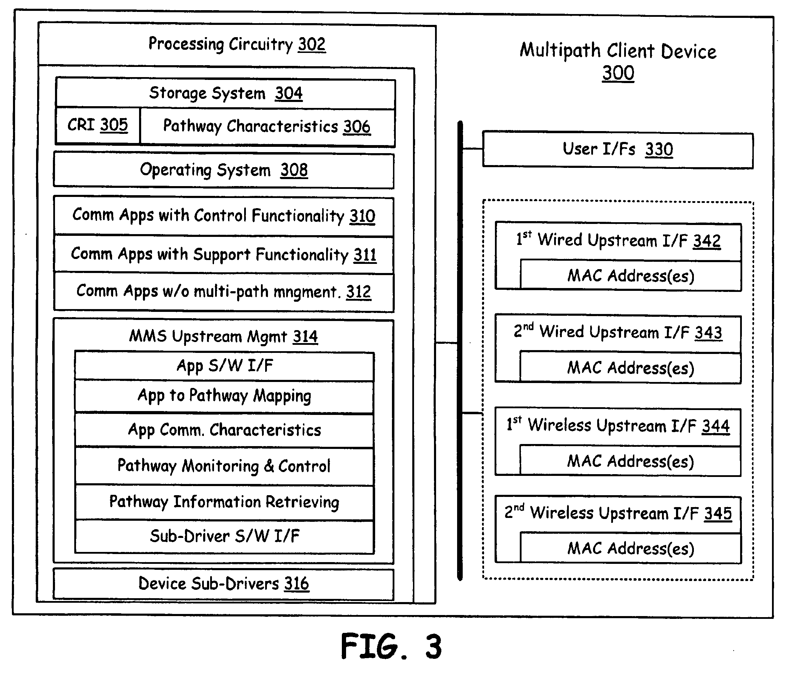

FIG. 3 is a schematic block diagram illustrating a plurality of components of a client device 155 or 157 of FIG. 1, the client device supporting a plurality of data paths from the client device 155 or 157 to a plurality of access points 133, 135 and 137 of FIG. 1. Multi-path client device 300 comprises a processing circuitry 302, a storage system 304, a user input interface 330, a first wired upstream interface 342, a second wired upstream interface 343, a first wireless upstream interface 344, and a second wireless upstream interface 345. Each of the wired and wireless interfaces (342, 343, 344 and 345) interacts with at least a corresponding hardware device, and the corresponding hardware device is uniquely identified by a medium access control (MAC) address. The corresponding hardware device typically comprises a transceiver. The transceiver is used to send and receive data (i.e., packet data). An operating system 308, which is software, runs on the multi-path client device 300.

The multi-path client device 300 associates itself with all available packet data networks. All the packet data networks are communicatively connected to Internet backbone. As illustrated, the multi-path client device 300 comprises four communication interfaces (342, 343, 344 and 345), and the multi-path client device 300 is able to associate itself with four packet data networks of different types. For example and without limitation, the multi-path client device 300 associates itself with a first access point of a cable data network via the first wired upstream interface 342. Association with the first access point of the cable data network includes allocation of a first IP address by the first access point. The multi-path client device 300 uses the first IP address and the first wired upstream interface 342 to send data to the cable data network and receive data from the cable data network via the first access point. In this non-limiting example the multi-path client device 300 is associated with a second access point of a fiber data network via the second wired upstream interface 343 and a second IP address. The multi-path client device 300 is further associated with a third access point that belongs to a satellite data network via the first wireless upstream interface 344 and a third IP address. The multi-path client device 300 is additionally associated with a fourth access point of an UMTS data network via the second wireless upstream interface 345 and a fourth IP address. The second IP address, the third IP address and the fourth IP address are assigned to the multi-path client device 300 by the second access point (i.e. the fiber data network), the third access point (i.e., the satellite data network) and the fourth access point (i.e., the UMTS network) respectively.

The user input interface 330 of the multi-path client device 300 may be a plurality of buttons, a keyboard, a touch screen, a mouse, a voice based interface, a pen, a thumbwheel etc. The multi-path client device 300 may a personal computer, a phone, a television, a headset, a video game box etc. If the multi-path client device 300 is a personal computer then the user input interface 330 is typically the mouse and the keyboard. If the multi-path client device 300 is a phone then the user input interface 330 is typically a screen and the plurality of buttons. If the multi-path client device 300 is a video game box then the user input interface 330 is typically the thumbwheel and a game pad. The multi-path client device 300 may send data to the Internet backbone. In this non-limiting example the multi-path client device 300 is a phone. The multi-path client device 300 receives a video selection via the plurality of buttons 330 (the user input interface). Without limitation, the video selection identifies a music video that is stored in an Internet server that is communicatively connected to the Internet backbone. The multi-path client device 300 is associated with (communicatively connected with) four access points, the first access point that belongs to the cable data network, the second access point that belongs to the fiber data network, the third access point that belongs to the satellite data network and the fourth access point that belongs to the UMTS network. All of the four access points are communicatively connected to the Internet backbone. The multi-path client device 300 now needs to send a request for the selected music video to the Internet backbone via any of the four access points.

A plurality of communication applications may be found within the storage system 304 of the multi-path client device 300. The communication applications 310, 311 and 312 may be, for example, a telephony applications, Internet browsing applications, media downloading applications, media mail or message servicing applications, television program applications, or any other software application that employs communication functionality. Each of the communication applications 310 is adapted to either: 1) take control of communication pathway selections for itself and for any other of the communication applications 310, 311 and 312; or 2) assist any other of the communication applications 310 and remote and local pathway management software in making such pathway selections. Each of the communication applications 311 are adapted to assist any of the communication applications 310 and remote and local pathway management software in making communication pathway selections. The communication applications 312, e.g., legacy applications, neither assist nor make the pathway selections.

Each of the communication applications 310, 311 and 312 have various associated communication characteristics, e.g., including but not limited to, and for each type of data exchanged and for each direction of flow the: 1) minimum required bandwidth; 2) maximum allowed delay; 3) desired link quality; 4) minimum permissible link quality; 5) security/encryption requirements; 6) priority level; 7) associated standards supported; and 8) periodic, sporadic or continuous communication demands. The communication applications 310 and 311 support exchange of the communication characteristics with local and remote pathway management software to support pathway selection. Local and/or remote management software identifies the communication characteristics for the communication applications 312 by applying one or more of the following approaches: 1) retrieving of predefined communication characteristics from local or remote storage; 2) prompting the user of the phone 310 for such characteristics; and 3) monitoring the actual communication activity associated with the communication application 312.

The local pathway management software, i.e., MMS (Multi-path Management Software 314), remote pathway management software running on any other network node (not shown), and communication applications 310 can each operate independently or cooperation to control overall communication flow via available pathways and for all of the communication software 310, 311 and 312. They can adapt depending on changes in current pathway conditions and communication software demands to reselect pathways and seamlessly switch communication flow as needed. For example, if one communication pathway is disrupted, current pathway traffic may be redirected to one or more other pathways without disrupting the underlying one or more communication applications.

When one of the communication applications 310 is selected to manage all communication flow, it initially receives and on an ongoing basis updates communication characteristics: 1) by directly interacting with other nodes in the available pathways; 2) from predefined storage associated with a given pathway or pathway type; 3) from a user of the multi-path client device 300; 4) from the MMS 314; 5) from other of the communication applications 310 and 311; 6) from predefined storage associated with any of the other communication applications 310, 311 and 312; 7) by monitoring a pathway or a communication application; and/or 8) from one or more remote pathway management software applications, for example. Such communication characteristics fall into two categories: a) those relating to available pathways; and b) those relating to other communication applications. Instead of managing all flow, one of the communication applications 310 may be put in charge of only managing its own communication flow.

Similarly, when the MMS 314 is selected to manage all communication flow, it initially receives and on an ongoing basis updates communication characteristics: 1) by directly interacting with other nodes in the available pathways; 2) from predefined storage associated with a given pathway or pathway type; 3) from a user of the multi-path client device 300; 4) from the communication applications 310 and 311; 5) from predefined storage associated with any of the other communication applications 310, 311 and 312; 6) by monitoring a pathway or a communication application; and/or 7) from one or more remote pathway management software applications, for example. Such communication characteristics fall into two categories: a) those relating to available pathways; and b) those relating to communication applications. Instead of managing all flow, the MMS 314 may be put in charge of only managing communication flow for a selected one or few of the communication applications 310, 311 and 312.

Likewise, when remote pathway management software is selected to manage all communication flow, it initially receives and on an ongoing basis updates communication characteristics: 1) by directly interacting with other nodes in the available pathways; 2) from predefmed storage associated with a given pathway or pathway type; 3) from a user of the multi-path client device 300; 4) from the MMS 314; 5) from other of the communication applications 310 and 311; 6) from predefmed storage associated with any of the other communication applications 310, 311 and 312; 7) by monitoring a pathway or a communication application; and/or 8) from one or more remote pathway management software applications, for example. Such communication characteristics also fall into two categories: a) those relating to available pathways; and b) those relating to other communication applications. Instead of managing all flow, the remote pathway management software may, for example, be put in charge of only managing: 1) communication flow for a selected one or few of the communication applications 310, 311 and 312; or 2) those of the communication applications 310, 311 and 312 that use a pathway that is directly associated with the remote pathway management software. For example, on a multi-path client device 300 (e.g., a phone) with the communication application 310 (e.g., a media downloading application) running interacts with local and remote multi-path management software to select, and seamlessly reselect when necessary, one or more available communication pathways for perhaps a streaming media download. Communication characteristics associated with the available pathways and with the communication applications support such selection and reselection.

More particularly, associated with a media downloading application (one of the communication applications 310), communication characteristics associated with the media downloading application may include minimum required bandwidth, maximum allowed delay, desired link quality, minimum permissible link quality, encryption needed for the data packets, data type, priority level of the packet data, etc. Although the media downloading application 310 has the capability of requesting and receiving a media stream from a network node communicatively coupled to the Internet backbone via any of the four access points, selection of one or more or all of those access points may be chosen beforehand with such selection being adapted as necessary to adequately meet the communication characteristics.

Each available communication pathway also has a plurality of communication characteristics associated therewith such as, for example, statistical, rated and current: bandwidth, delay, quality of service support, link quality, security rating, data type, costs, etc. By gathering communication characteristics of both the communication applications and the available pathways, selection of pathways and distribution of flow can be better managed. As used herein, communication characteristics associated with available communication pathways are referred to as "pathway characteristics", while communication characteristics associated with communication applications are referred to as "communication requirement information (CRI)" or "communication requirements". Communication characteristics associated with a local end point device that communicates with a remote second end point device are referred to herein as "local communication characteristics" (comprising "local CRI" and "local pathway characteristics") and "remote communication characteristics" (comprising "remote CRI" and "remote pathway characteristics"), respectively.

Returning to the prior example, CRI 305 associated with any one or more of the communication applications 310, 311 and 312 are retrieved from the storage system 304 by the media downloading application, i.e., one of the communication applications 310. The media downloading application also retrieves CRI directly from any other one or more of the communication applications 310, 311 and 312. The media downloading application also retrieves pathway characteristics 306 from one or more or all of: a) the storage system 304; b) the MMS 314; c) remote pathway management software; and d) direct monitoring of available pathway activity/performance. As illustrated, at least four available pathways exists via the four access points and the corresponding four interfaces 342, 343, 344 and 345. The pathway characteristics corresponding to each of the available pathways may comprise any characteristic from which the ability to support ongoing underlying communication flow can be reasonably determined, e.g., maximum bandwidth supported, power requirements, delay present, congestion, and monetary cost, etc. Specifically, The pathway characteristics corresponding to the first wired upstream interface 342 may include, for example, maximum bandwidth supported by the cable data network, power required to transmit and receive data on first pathway between the first access point and the first wired upstream interface 342, expected delay experienced by a packet data flowing through the first pathway, and interference level. The pathway characteristics corresponding to the wired upstream interfaces 343, 344 and 345 similarly reflect ratings and associated current and historical statistics.

After gathering the communication characteristics, i.e., the CRI and pathway characteristics, the media downloading application can make pathway selections and coordinate with the MMS 314, remote pathway management software, other communication software 310 and 311 and/or other network nodes as necessary and begin the media download streaming. Typically, some of the pathway characteristics remain unchanged as long as the association does not change, e.g., maximum bandwidth capacity or peak bandwidth demands. Others vary frequently or continuously over time with delay, loading, and interference level. Likewise, CRI associated with each communication application may vary over time, such as when in an idle communication state, not running or experiencing unexpectedly high utilization. If the CRI and/or pathway characteristic variances limit the ability to support the current CRI requirements, the media downloading application will reselect pathways and coordinate seamless switching with the MMS 314, remote pathway management software, other communication software 310 and 311 and/or other network nodes as needed. Similarly, local multi-path management software, the MMS 314, or remote multi-path management software running on any other network node may make pathway selection decisions, reselection decisions and manage seamless switching when needed. For example, the MMS 314 may collect the CRI regularly (e.g., from users and communication applications, and by monitoring activity) and pathway characteristics (e.g., from users, by monitoring activity, and from network nodes in the available pathways). Once collected, the CRI and pathway characteristics are used by the MMS 314 to select and reselect pathways as needed. The MMS 314 may also save the retrieved communication characteristics in the storage system 304.

Pathway selection involves any manner of allocating one or more available pathways, in whole or in part, to each of one or more communication applications, such as, for example, allocating: 1) a first pathway to a first communication application, and a second pathway to a second communication application; 2) a first pathway to upstream flow from a first application, and a second pathway to the downstream flow to the first application; and/or 3) a first pathway to a first application and a portion of the flow associated with a second application, and a second pathway to the remainder of the flow associated with the second application. As new communication applications come online or others go offline and as communication characteristics otherwise change, reallocation with seamless switching will occur as needed.

As an example, the media downloading application may be associated via pathway selection with the second wired upstream interface 343. If it makes such selection, the media downloading application directs the MMS 314 to forward all communications corresponding to the media downloading application to be routed via the second wired upstream interface 343. Thereafter, when the multi-path client device 300 receives a download from the Internet backbone via the fiber data network and the second wired upstream interface 343, that download is forwarded to the media downloading application. The multi-path client device 300 may send and receives control data (if necessary) corresponding to the downloading via the selected second pathway. The MMS 314 helps in directing the packet data via the pathway selected by the media downloading application.

The media downloading application 310 in response to, for example, a music video selection needs to send a request for the selected music video to the Internet backbone. Sub-driver corresponding to the second wired interface 343 directs a first data containing the request for the selected music video to flow out of the second wired interface 343. The second wired interface 343 (i.e., hardware associated with the second wired interface 343) sends the first data to the second access point using the second IP address. The request for the selected music video eventually reaches the Internet backbone via the selected pathway (i.e., the pathway corresponding to the second wired interface 343). The Internet backbone forwards the first data to the Internet server. The Internet server having the selected music video responds to the request by sending the selected music video to the Internet backbone. The multi-path client device 300 is instructed by the media downloading application 310 to receive the selected music video from the Internet backbone via the selected pathway. The second wired interface 343 receives the selected music video from the second access point (that is connected to the Internet backbone via the fiber data network) using the second IP address.

In an alternate example, a media downloading application using a plurality of communication characteristic (pathway characteristics and CRI) decides to select and use two pathways from the four available pathways. The media downloading application may take such a decision because of the large size of the selected music video, heavy traffic on all the four available upstream pathways, improve reliability, error correction, etc. The media downloading application directs a portion of the packet data corresponding to the selected music video via the first pathway and the first wired upstream interface 342 and directs the remaining portion of the selected music video via the second pathway and the second wired upstream interface 343. The media downloading application 310 may decide to receive alternate packets via the first pathway and remaining packets via the second pathway. The media downloading application 310 may decide upon any other combination for receiving the selected music video via the first pathway and the second pathway. This and other types of multi-path selection and usage require participation of the downloading source device, i.e., an end-point device such as a server or another client device. Pathway management software on the source device and on the destination device (i.e., the MMS 314) coordinates the partitioning of data flow there between and reassembly upon receipt. In fact, any use of multiple paths to support a single communication application on one end-point device and a single communication application on another end-point device can involve coordination between either or both of the two communication applications or underlying two pathway management applications. Thus, in addition to CRI and pathway characteristics, the local pathway selection process may also involve identifying the remote communication application CRI (which identifies capabilities) and the remote pathway characteristics. With local and remote communication characteristics available, a local communication application and/or the local MMS could not only make more appropriate local pathway selections, but could also control, suggest or agree to corresponding remote pathway selections.

Various factors can trigger pathway reselection, as previously mentioned. As a further example, quality of the first pathway drops below the link quality desired for media downloading application 310 at an instance of time. The media downloading application 310 may respond by selecting an additional or alternate pathway that meets the desired link quality, e.g., from the third pathway and the fourth pathway. The media downloading application 310 redirects or splits the data flow via the third and/or forth pathway instead of or in addition to the first pathway. The MMS 314 interacts with device sub-drivers 316 to route the packet data via the pathways that are selected. The device sub-drivers 316 are software that interact with the MMS 314 and hardware associated with the four upstream interfaces (342, 343, 344 and 345).

A communication application 311 with integrated support functionality, e.g., a phone call application, also runs on the multi-path client device 300. As an example, the phone call application running is not adapted to select a pathway from the available four upstream pathways but does assist in the process. The phone call application delivers its CRI to the MMS 314 which may make the pathway selection for the phone call application. Such delivery of CRI may be upon request or via the storage system 304. A user of the multi-path client device 300 enters a phone call set up request using the user input interface 330. The MMS 314 responds to the phone call set up request or at an earlier time (such as upon initial execution of the phone call application) by, after identifying that the phone call application comprises integrated support functionality, retrieving CRI associated with the phone call application from the phone call application and/or the storage system 304. The MMS 314 also retrieves the plurality of pathway characteristics corresponding to the four communication pathways from the storage system 304 and/or from the interfaces or any other network node in the four pathways. The MMS 314 selects and reselects when necessary one or many pathways from the four available pathways for the phone call application using the retrieved communication characteristic.

As an example, the MMS 314 selects the third pathway via the second wireless upstream interface 345 and directs device driver corresponding to the second wireless upstream interface 345 to receive and send packet data corresponding to the phone call via the second wireless upstream interface 345. The phone call between the multi-path client device 300 and a destination terminal that is communicatively connected to the Internet backbone is carried from the multi-path client device 300 to the Internet backbone via the UMTS network and the fourth access point. The same UMTS network or some other packet switched network may carry the phone call from the Internet backbone to the destination terminal. A second MMS running on the destination terminal and/or any one or more MMS running on any node or nodes in between the Internet backbone and the destination terminal selects pathway for carrying the phone call between the Internet backbone and the destination terminal.

The MMS 314 may seamlessly switch to a different pathway, for example, the second pathway at an instance of time. The switching may be performed when the fourth pathway no longer satisfies the second communication characteristic associated with the phone call application. For example, interference on the fourth pathway may exceed the maximum allowed limit at the instance of time or traffic on the UMTS network may increase such that the fourth pathway between the multi-path client device 300 and the UMTS network does not support the minimum data rate required for the phone call at the instance of time. The phone call application 311 running on the multi-path client device 300 may be kept unaware of the switching from the fourth pathway to the second pathway. The phone call between the multi-path client device 300 and the Internet backbone is carried by the second access point and the fiber data network after the switching.

Alternatively, to perform the pathway selection, the MMS 314, remote pathway management application, or communication applications 310 cause the presentation of a confirmation or selection request to the user of the multi-path client device 300, with or without the associated communication characteristics retrieved. Such presentation will typically be made via a screen, but other mechanisms are contemplated.

The communication application software 310 or 311 may be an Internet browser application program, for example, that runs on a single or multi-path client device which is adapted to support both local and remote multi-path management. For example, the pathway selection and seamless switching over time to accommodate a remote Internet server's upstream pathway selection is performed with assistance of such Internet browser application running on either a single or multi path client device.. Likewise, multi-path management software may be loaded on any end-point device (i.e., a single or multi path client or server) and assist the remote multi-path management process. And if multiple pathways are available locally, local multi-path management will engage with remote assistance when needed. Such assistance by a communication application or the MMS 314 includes, for example, coordinating the splitting and reassembling payloads via multiple pathway delivery, handoff, establishing half duplex pathways, network address changes, etc.

The communication application software 311 is made aware, and, more importantly, assists the process. For example, the communication application software 311 may communicate current and future demands and requirements directly and on an ongoing basis to the MMS 314 to assist the selection and management process. The user may be offered the four pathways for selection based on the plurality of communication characteristics displayed on the screen of the multi-path client device 300. The user may be offered to select more than one pathway from the four available pathways. The communication application software 311 responds to pathway selection made by the user by informing the MMS 314 about the pathway selection. If the user selects a single pathway from the available four pathways then the MMS 314 directs the corresponding sub-driver to route the packet data via the selected communication interface. If the user selects two pathways from the available four pathways then the MMS 314 directs the corresponding two sub-drivers to route the packet data via the two selected pathways.

The MMS 314 decides which pathway carries which portion of the entire data load. The MMS 314 may decide to direct every alternate data packets via one of the two selected pathways and to direct remaining data packets via other of the two selected pathways.

In a fourth embodiment a communication application without multi-path management capability 312 is running on the multi-path client device 300. As an example a multimedia messaging application that runs on the multi-path client device 300 neither manages nor helps the MMS 314 in managing the four upstream communication pathways from the multi-path client device 300. The user inputs a request for sending a multimedia message using the user input interface 330. The MMS 314 running on the multi-path client device 300 responds to the request for sending the multimedia message by retrieving a third communication characteristic 307 corresponding to the multimedia messaging application 312. The MMS 314 determines that the multimedia messaging application 312 is without multi-path management capability using the third communication characteristic 307. The MMS 314 collects the pathway characteristics corresponding to the four pathways between the four access points and the corresponding four interfaces (342, 343, 344 and 345) of the multi-path client device 300. The MMS 314 stores the collected pathway characteristics in the storage system 304. The MMS 314 updates the stored pathway characteristics by collecting the pathway characteristics periodically or upon user request, for example.

In this exemplary case, the MMS 314 selects a pathway corresponding to the second wired interface 343 from the four available pathways for sending the multimedia message. The second wired interface 343 in this exemplary case is associated with the second access point that belongs to the fiber data network. The MMS 314 running on the multi-path client device 300 directs corresponding device sub-driver to route all future data transmission to and reception from the Internet backbone via the second wired interface 343. The sub-drivers 316 is software that drives all hardware devices corresponding to the first wired upstream interface 342, the second wired upstream interface 343, the first wireless upstream interface 344, and the second wireless upstream interface 345. The hardware devices are uniquely identified by their MAC addresses.

Data traffic in the four packet data networks change with time and consequently the pathway characteristics change with time. The MMS 314 running on the multi-path client device 300 collects the pathway characteristics at regular intervals while the multi-path client device 300 sends the multimedia message to the Internet backbone via the selected second wired interface 343. The interval at which the MMS 314 collects the pathway characteristics is a preset value. For example, interference level on the second pathway increases with time. The MMS 314 may be adapted to respond whenever the interference level on the selected pathway exceeds an upper limit. The upper limit may be a preset value. If at an instance of time the interference level on the second pathway exceeds the upper limit, the MMS 314 running on the multi-path client device 300 looks up into the most recently collected pathway characteristics and selects an alternate pathway that has least interference among remaining three pathways (i.e., pathway via the first wired upstream interface 342, pathway via the first wireless upstream interface 344 and pathway via the second wireless upstream interface 345). As an example and without limitation, the pathway via the first wireless upstream interface 344 has the least interference at the instance of time. The MMS 314 directs the sub-driver corresponding to the first wireless upstream interface 344 and the sub-driver drives the hardware so that the multi-path client device 300 receives and transmits data via the first wireless upstream interface 344 instead of the second wired upstream interface 342. The first wireless upstream interface 344 is associated with the third access point that belongs to the satellite data network. The hardware associated with the first wireless upstream interface 344 sends the multimedia message to the Internet backbone. The multimedia message eventually reaches a destination device that is communicatively connected to the Internet backbone. The MMS 314 and corresponding sub-driver control a switching of pathway at the instance of time, from a high interference pathway to a lowest interference pathway without any loss of data. The MMS 314 may be additionally adapted to respond whenever the delay in the selected pathway exceeds an upper limit.

The MMS 314 and the sub-driver 316 route data via the user-selected pathway. In another embodiment, whenever an application running on the multi-path client device 300 needs to send and/or receive data from the Internet backbone, the MMS 314 looks up into the most recently collected values of the communication characteristics and selects a pathway from those currently available. The selection made by the MMS 314 may depend on type of data to be sent or received from the Internet backbone. For example and without limitation, where a communication application is a multimedia gaming application, downloading of a high volume of data with low latency may be required. The MMS 314 running on the multi-path client device 300 responds to the multimedia gaming application's CRI by looking up into the most recently collected values of the pathway characteristics and selecting one or more of the available pathways, e.g., one pathway that offers highest bandwidth among the four available pathways. In this example, pathway between the second access point and the second wired upstream interface 343 offers the highest bandwidth among the four available. The MMS 314 running on the multi-path client device 300 directs the device sub-driver 316 to route all future data transmission and reception from the Internet backbone required by the multimedia gaming application via the second wired upstream interface 343. Data transmission and reception from the Internet backbone to the multi-path client device 300 passes through the fiber data network.

In yet another embodiment, for example and without limitation, the application is a voice over IP (VoIP) application. The VoIP application calls for transmission and reception of voice packets from the Internet backbone. The MMS 314 running on the multi-path client device 300 may respond to the VoIP application requirement by retrieving the most recently collected communication characteristics and selecting a pathway that offers minimum delay among the four available. In this example, the pathway between the fourth access point and the second wireless upstream interface 345 may offer the least delay among the four available pathways. The MMS 314 running on the multi-path client device 300 directs the device sub-driver 316 to route data transmission and reception required by the VoIP application from the Internet backbone via the second wireless upstream interface 345. Data transmission and reception from the Internet backbone to the multi-path client device 300 passes through the WiMax network.

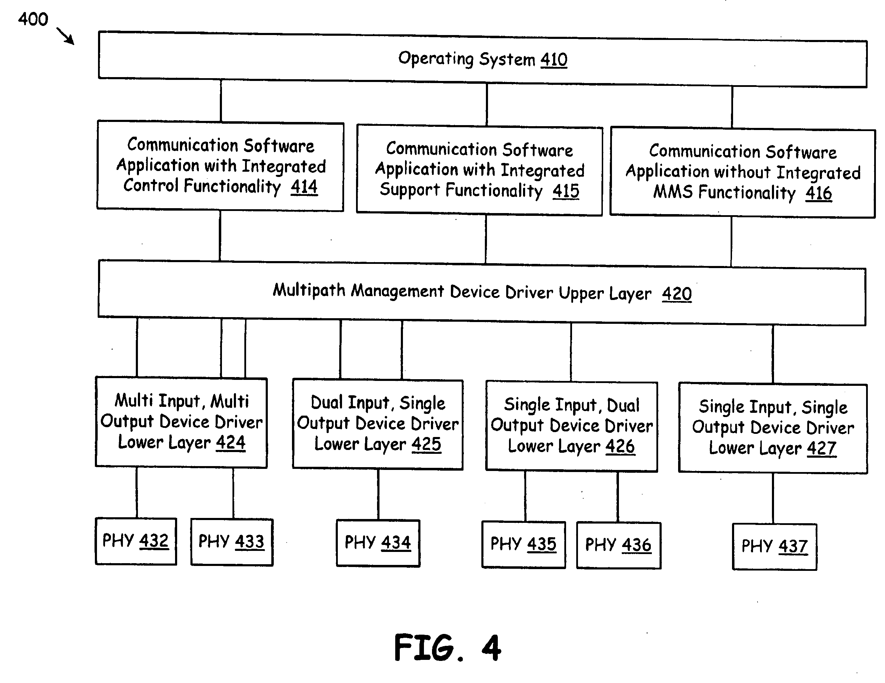

FIG. 4 is a schematic block diagram illustrating a plurality of software running on a client device 400, the client device 400 supporting a plurality of data paths from the client device 400 to a plurality of access points. The client device 400 may be a computer, a video game box, a phone, a television and a set top box, a headset or any of a variety of a device that runs at least an application that requires transmission and reception of data packets from Internet. If the client device 400 is the computer, then for example and without limitation, the at least an application running on the computer 400 may be an Internet browsing (i.e., Web browsing) application that runs on layer 7 of OSI/ISO protocol stack. A user typically interacts with the Internet browsing application via a Web Browser (i.e., Internet Explorer, Netscape Navigator, Mozilla Firefox, etc.) displayed on a screen of the computer 400. The Internet browsing application running on the computer 400 responds to user selection entered via a user input interface (typically a keyboard and a mouse) by triggering a communication interface (i.e., typically layer 2 and/or layer 1 of OSI/ISO protocol stack) of the computer 400 to send a request to the Internet for an archived data (e.g., a web page) that is identified by the user selection. Lower layer hardware and software running on the computer 400 (i.e., layer 6, layer 5, layer 4, layer 3, layer 2 of OSI/ISO protocol stack) encapsulates the request in a first plurality packets and the communication interface of the computer 400 sends the first plurality of packets to the Internet. The communication interface of the computer 400 also receives a second plurality of packets that contain the requested archived data (i.e., web page), from the Internet. In this exemplary case the data packets refer to the first plurality of packets and the second plurality of packets. The lower layer hardware and software running on the computer 400 (i.e., layer 6, layer 5, layer 4, layer 3, layer 2 of OSI/ISO protocol stack) extracts the received archived data from the second plurality of packets and forwards the received archived data to the Internet browsing application (i.e., layer 7 of OSI/ISO protocol stack). The Internet browsing application displays the received archived data i.e., the requested web page on the screen of the computer 400.

The at least an application running on the computer 400 may be an Internet telephony application. A first user is sending and receiving voice information from a second user using a destination device. The Internet telephony application is also running on the destination device. The destination device is communicatively connected to the Internet. In such a case, the first plurality of packets comprise voice of the first user using the computer 400. The second plurality of packets comprise voice of the second user using the destination device.

If the client device 400 is the television and the set top box, then for example and without limitation, the at least an application running on the television and the set top box 400 may be a television program viewing application. In such a case the first plurality of packets comprise a request for a television program (recorded or live multimedia information, such as a news program, a football game, a music program etc.) sent to the Internet and the second plurality of packets comprise the requested television program.

The client device 400 comprises a plurality of communication interfaces. The client device 400 communicates with a plurality of access points via the plurality of data paths. The plurality of access points belong to a plurality of heterogeneous packet data networks. For example and without limitation, the client device 400 comprises three communication interfaces, a wired interface, a first wireless interface and a second wireless interface. The client device 400 associates itself with available access points when the client device is turned on. An access point comprises a transceiver that receives data packets from the client device 400 and sends the received data packets to a corresponding packet data network. Again the access point receives data packets from the corresponding packet data network and sends the received data packets to the client device 400.

For example and without limitation, at a first instant of time, the client device 400 is collocated with a first access point that belongs to a fiber data network, a second access point that belongs to an IEEE 802.11 network, a third access point that belongs to a WiMax network and a fourth access point that belongs to a satellite data network. A fiber cable is plugged into the wired interface of the client device 400. The client device 400 associates itself with the first access point, the second access point and the third access point, via the wired interface, the first wireless interface and the second wireless interface respectively, when the client device is turned on. The first access point allocates a first IP to the wired interface of the client device 400. The client device 400 is able to communicate with the fiber data network via the wired interface and the first access point and using the first IP address. The second access point allocates a second IP to the first wireless interface of the client device 400. The client device 400 is able to communicate with the IEEE 802.11 network via the first wireless interface and the second access point and using the second IP address. The third access point allocates a third IP to the second wireless interface of the client device 400. The client device 400 is able to communicate with the WiMax network via the second wireless interface and the third access point and using the third IP address. The plurality of access points with which the client device 400 communicates is the first access point, the second access point and the third access point. The plurality of data paths refer to a first data path between the wired interface and the first access point, a second data path between the first wireless interface and the second access point and a third data path between the second wireless interface and the third access point. The plurality of heterogeneous packet data networks refer to the fiber data network, the IEEE 802.11 network and the WiMax network.

An operating system 410 (for e.g., Windows XP, UNIX, Linux etc.) running on the client device 400 interacts with a communication software application program. The communication application software may be one with integrated control functionality as shown in block 414. The communication application software 414 is adapted to monitor and manages multiple data paths (the first data path, the second data path and the third data path) between the client device 400 and the Internet. The communication application software 414 decides which one or more data paths from the available multiple paths (the first data path, the second data path and the third data path) are to be used for exchanging packet data between the client device 400 and the Internet. The communication application software 414 in addition may change the decision and select a different path for packet data exchange at an instance of time. The decision to switch packet data communication to the different path may be triggered by 1) a change in network association of the client device 400 which may be caused by a change in location of the client device, 2) a change in communication characteristics of the multiple paths, such as a change in data traffic, delay, cost, congestion experienced the multiple paths, 3) a change in communication characteristics of the communication application 414 such as a change in data type, a change in data load etc. The communication application software 414 conveys the decision to use one or more data paths to multi-path management software 420 that is running on the client device 400. The MMS 420 directs the lower layer hardware and software running on the computer 400 (i.e., layer 6, layer 5, layer 4, layer 3, layer 2 of OSI/ISO protocol stack) to route packet data via the selected one or more data paths. The MMS 420 helps the client device 400 to use the data paths selected by the communication application software 414. The communication application software 414 may be a standard Web browsing application (e.g. IE, Netscape Navigator, Mozilla Firefox, etc.) with a plurality of additional features. The plurality of additional features allows a user who is using the client device 400 to interact with the multi-path management functionality of the communication application software 414.

The communication application software may be one with integrated support functionality as shown in block 415. The communication application software 415 supplies communication characteristics of the communication application to a multi-path management software 420 (MMS) that is running on the client device 400. The communication characteristics of the communication application 415 may comprise type and volume of data exchanged by the communication application software 415, minimum data rate, level of security, maximum delay etc. that are desired by the communication application 415. The communication characteristics corresponding to the communication application 415 may change with time and the communication application 415 may furnish the communication characteristics to the MMS 420 at regular intervals or as and when changes occur. The MMS 420 responds to any packet data sending and/or receiving request generated by the communication application software 415 by looking into the communication characteristics and by selecting a data path from the available data paths using the communication characteristics. The MMS 420 directs lower level hardware and software running on the client device 400 (i.e., layer 6, layer 5, layer 4, layer 3, layer 2 of OSI/ISO protocol stack) to route packet data via the selected data path. The MMS 420 may select more than one data path for serving more than one communication applications 415 running on the client device 400. The MMS 420 may alternately select more than one data path for a single communication application 415 running on the client device 400 and direct the single data payload (i.e. data packets generated by a single communication application 415) via the selected multiple paths. The MMS 420 decides which one or more of the available data paths to be used for packet data exchange and the communication application software 415 helps the MMS 420 in making the decision by furnishing the communication characteristics.

The communication application software may be one without integrated multi-path management functionality as shown in block 416. The communication application software 416 sends a packet data sending and/or receiving request to the MMS 420. The request may be triggered by a user input. The MMS 420 in response to the request selects one or more data paths from the available data paths and directs the lower level hardware and software running on the client device 400 to route data packets via the selected one or more data paths. The selection of the one or more paths is done by the MMS using the communication characteristics of the available multiple paths. The MMS 420 may alternately pop up a window on a screen of the client device 400 and may display the communication characteristics of the available multiple paths, such as traffic carried by the paths, delay, cost, congestion experienced by the available multiple paths etc. The user is prompted to enter a selection. The MMS 420 responds to the user selection by directing flow of packet data via the user-selected data path.

The MMS 420 controls a plurality of lower layer device drivers (424, 425, 426 and 427). The lower layer device driver is software that drives hardware associated with one or more of the plurality of communication interfaces (i.e., the wired interface, the first wireless interface, and the second wireless interface) of the client device 400. A single input single output (SISO) lower layer device driver 437 accepts data packets via a single input line from the MMS 420. The SISO device driver 427 controls exchange of data packets over a single data path. For example, SISO device driver 427 drives hardware associated with the first wireless interface. The first wireless interface is associated with the IEEE 802.11 network at the first instance of time. The SISO device driver 427 accepts the data packets via the single input line from the MMS 420. The MMS 420 embeds the second IP address assigned by the IEEE 802.11 network to the first wireless interface in the data packets. The SISO device driver 427 directs a transmitter associated with the first wireless interface to transmit the data packets. The data packets transmitted by the transmitter associated with the first wireless interface are embedded with the second IP address. Consequently the second access point that belongs to the IEEE 802.11 network receives the data packets transmitted by the transmitter. The SISO device driver 427 directs a receiver associated with the first wireless interface to look out for any data packet embedded with the second IP address. When the receiver associated with the first wireless interface senses a data packet embedded with the second IP address, the receiver receives the data packet and forwards the data packet to the SISO device driver 427. The SISO device driver 427 forwards the received data packet to the MMS 420.

The MMS 420 directs the SISO device driver 427 to collect communication characteristics related to the single data path, exchange of data packets over which is controlled by the SISO device driver 427. Physical layer 437 refers to the single data path that the SISO device driver 427 controls. The communication characteristics may include delay in the data path, the signal to noise ratio on the data path, power required by the transmitter associated with the first wireless interface to maintain a predefined bit error rate on the data path. The SISO device driver 427 may request the second access point to supply some or all of the communication characteristics, and the SISO device driver 427 may subsequently forward communication characteristics received from the second access point to the MMS 420. The SISO device driver 427 may measure some or all of the communication characteristics by sending and receiving a training packet data.

The SISO device driver 427 collects the communication characteristics related to the single data path at regular intervals of time. As an example and without limitation, the MMS 420 receives the communication characteristics at a second instance of time and determines that the delay in the single data path is more than a preset threshold value. The MMS 420 may direct the SISO device driver 427 to change association and switch to a new association. The SISO device driver 427 directs the first wireless interface to look out for access points that belongs to wireless packet data networks other than the IEEE 802.11 network. The first wireless interface may now associate itself with the third access point that belongs to the WiMax network. The WiMax network may allocate a fourth IP address to the first wireless interface. The SISO device driver 427 now controls exchange of data packets over a different path between the first wireless interface and the third access point that belongs to the WiMax network. Switching of pathway is triggered and managed by the MMS 420 and such switching may take place even when the first wireless interface is not transmitting or receiving any packet data from the Internet (except control data and data containing some or all of the communication characteristics). The MMS 420 may direct the SISO device driver 427 to collect a second communication characteristics related to the different path, exchange of data packets over which is controlled by the SISO device driver 427 from the second instance of time onwards.

A single input dual output (SIDO) lower layer device driver 426 accepts data packets via a single input line from the MMS 420. The SIDO device driver 426 controls exchange of data packets over a first path 435 and a second path 436. For example, SIDO device driver 426 drives a first hardware associated with the wired interface and a second hardware associated with the first wireless interface. The wired interface is associated with the fiber data network and the first wireless interface is associated with the IEEE 802.11 network at the first instance of time. The SIDO device driver 426 accepts the data packets via the single input line from the MMS 420. The MMS 420 directs the SIDO device driver 426 to collect a first plurality of communication characteristics related to the first path 435 between the wired interface and the first access point that belongs to the fiber data network. The MMS 420 also directs the SIDO device driver 426 to collect a second plurality of communication characteristics related to the second path 436 between the first wireless interface and the second access point that belongs to the IEEE 802.11 network. The NMS 420 selects one of the first path 435 and the second path 436 using the first plurality of communication characteristics and the second plurality of communication characteristics. The MMS 420 may be adapted to select a path that offers lowest interference at a given instance of time. The MMS 420 may be alternately adapted to select a path that offers highest bandwidth at a given instance of time.

For example and without limitation, the second path 436 offers a higher bandwidth than the first path 435. The MMS 420 embeds the second IP address assigned by the IEEE 802.11 network to the first wireless interface in data packets before sending the data packets to the SIDO device driver 426. The MMS 420 directs the SIDO device driver 426 to direct the data packets via the second path 436. The SIDO device driver 426 directs the second hardware associated with the first wireless interface to transmit the data packets. The data packets transmitted by the second hardware associated with the first wireless interface are embedded with the second IP address. Consequently the second access point that belongs to the IEEE 802.11 network receives the data packets transmitted by the transmitter. The SIDO device driver 426 directs the second hardware to look out for any data packet embedded with the second IP address. When the second hardware senses a data packet embedded with the second IP address, the second hardware receives the data packet and forwards the data packet to the SIDO device driver 426. The SIDO device driver 426 forwards the received data packet to the MMS 420.

At a second instance of time the client device 400 moves to a new location. The association with the second access point is lost. The first wireless interface looks out for available wireless packet data networks. As an example, the first wireless interface associates with a fourth access point that belongs to the IEEE 802.11 network. The fourth access point allocates a fourth IP to the first wireless interface. The second path 436 now refers to a communication path between the first wireless interface and the fourth access point. The MMS 420 directs the SIDO device driver 426 to collect a first plurality of communication characteristics related to the first path 435 and a third plurality of communication characteristics related to the new second path 436. The MMS 420 determines that at the second instance of time, the first path 435 between the wired interface and the first access point offers higher bandwidth than the new second path 436. The MMS 420 subsequently directs the SIDO device driver 426 to route data packets via the first path 435 and stop transmitting and receiving data packets via the new second path 436. The MMS 420 embeds the first IP address assigned by the first access point that belongs to the fiber data network in data packets before sending the data packets to the SIDO device driver 426, so that the SIDO device driver 426 directs the data packets via the first path 435.

A multiple input multiple output (MIMO) device driver 424 accepts data packets via three input lines from the MMS 420, i.e., the MIMO device driver 424 accepts data packets generated by three different applications running on the control device 400. The MIMO device driver 424 controls exchange of data packets over a first path 432 and a second path 433. For example, MIMO device driver 424 drives a first hardware associated with the first wireless interface and a second hardware associated with the second wireless interface. The first wireless interface is associated with the second access point that belongs to the IEEE 802.11 network and the second wireless interface is associated with the third access point that belongs to the WiMax network at the first instance of time. The MIMO device driver 424 accepts the data packets via the three input lines from the MMS 420. For example, a gaming application, a Web browsing application and an Internet telephony application is running on the client device 400. All of these communication applications are for example without integrated multi-path management functionality. The MIMO device driver 424 accepts a first plurality of data packets corresponding to the gaming application, a second plurality of data packets corresponding to the Web browsing application and a third plurality of data packets corresponding to the Internet telephony application via the three input lines.

The MMS 420 selects a higher bandwidth path from the first path 432 and the second path 433 and directs the MIMO device driver 424 to route the first plurality of data packets corresponding to the gaming application through the higher bandwidth path. If the gaming application is not running on the control device at a second instance of time, then the MMS 420 directs the MIMO device driver 424 to route the third plurality of data packets corresponding to the Internet telephony application through the higher bandwidth path. For example and without limitation, at a third instance of time the second path 433 between the second wireless interface and the third access point that belongs to the WiMax network goes down. The second wireless interface now associates itself with a fifth access point that belongs to the IEEE 802.11 network. The first path 432 refers to a path between the first wireless interface and the second access point that belongs to the IEEE 802.11 network. The second path 433 refers to a path between the second wireless interface and the fifth access point that belongs to the IEEE 802.11 network.

At the third instance of time, both the first path 432 and the second path 433 offer same bandwidth. Now the MMS 420 may direct the direct the MIMO device driver 424 to route the first plurality of data packets corresponding to the gaming application through the lower interference path. The MMS 420 controls selection of a path from a plurality of paths (for e.g., the first path 432 and the second path 433) and maintains exchange of data packets over the selected path by directing the lower layer device driver (one or more of 424, 425, 426 and 427) to interact with the corresponding hardware (for e.g., transmitter and receiver) appropriately. The MMS 420 and the lower layer device driver (one or more of 424, 425, 426 and 427) may retrieve a plurality of communication characteristics corresponding to the plurality of paths and use the plurality of retrieved communication characteristics to seamlessly switch to a new path for the exchange of data packets.

As an example, at a first instance of time the client device 400 is associated with the first access point that belongs to the fiber data network via the wired interface, the second access point that belongs to the IEEE 802.11 network via the first wireless interface, and the third access point that belongs to the WiMax network via the second wireless interface. Thus the client device 400 may exchange packet data with the Internet via any one or more of the available three pathways, first one between the first access point and the wired interface, second one between the second access point and the first wireless interface and third one between the third access point and the second wireless interface. At the first instance of time an Internet telephony application starts running on the client device 400. The Internet telephony application is a communication application with integrated control functionality. The Internet telephony application 414 receives the communication characteristics corresponding to the three available pathways from the MMS 420. The Internet telephony application 414 uses the communication characteristics to select a pathway from the available three pathways and instructs the MMS 420 to direct flow of voice packets via the selected pathway. As an example the Internet telephony application 414 determines that the first pathway offers lowest cost among the three available pathways and chooses to use the first pathway for exchanging the voice packets. At a second instance of time the Internet telephony application 414 starts sending video packets along with the voice packets. The Internet telephony application selects a second pathway from the remaining two available pathways. As an example the Internet telephony application 414 determines that the second pathway offers highest bandwidth among the three pathways (the first pathway, the second pathway and the third pathway) and chooses to use the second pathway for sending video packets to the Internet. From the second instance of time onwards, the Internet telephony application 414 uses the first pathway for exchanging the voice packets and uses the second pathway for sending the video packets. The third pathway is lying idle at the second instance of time.

At a third instance of time the Internet telephony application 414 desires to exchange control data packets with the Internet (or an end-point device communicatively connected to the Internet). The Internet telephony application 414 is aware that the control data packets are to be sent over the most secure pathway. The Internet telephony application 414 determines that the first pathway is most secure among the three pathways. The voice packets are flowing via the first pathway. The Internet telephony application 414 directs the MMS 420 to route the voice packets via the third pathway and also to route the control data packets via the first pathway. The Internet telephony application 414 instructs the switching of the voice packets from the first pathway to the third pathway seamlessly, so that no voice packet is lost during switching. From the third instance of time onwards, the client device 400 sends the control data packets through the first pathway, sends the video packets through the second pathway and exchanges the voice packets with the Internet through the third pathway.

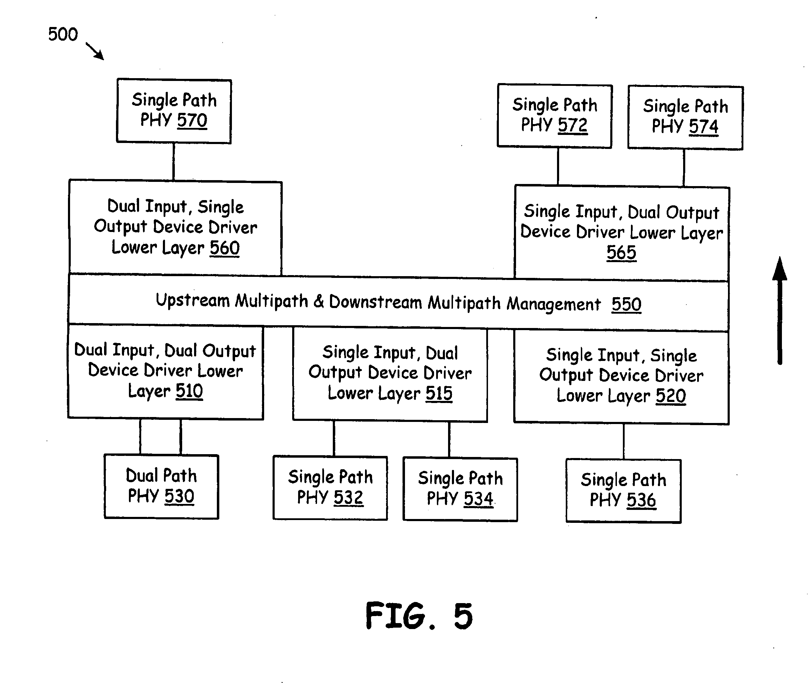

FIG. 5 is a schematic block diagram illustrating a plurality of software running on an access point 500, the access point 500 supporting a first plurality of data paths from the access point 500 to a plurality of client devices and supporting a second plurality of data paths from the access point to a packet switched network. The access point 500 is associated with the packet switched network and the plurality of client devices. The access point and the packet switched network may agree upon a protocol and the access point uses the protocol to communicate with the packet switched network. The access point assigns a plurality of IP addresses to the plurality of client devices. The access point 500 comprises at least a transceiver that receives a first plurality of data packets from the packet switched network via one of the second plurality of data paths, identifies a client device from the plurality of client devices, that the first plurality of data packets are destined for, and sends the received data packets to the identified client device. The transceiver in addition receives a second plurality of data packets from one or some of the plurality of access points and sends the second plurality of data packets to the packet switched network via the one of the second plurality of data paths. A multi-path management software (MMS) 550 running on the access point 500 selects the one of the second plurality of data paths for data packet exchange between the access point and the packet data network.

For example and without limitation, the access point 500 is associated with a WiMax network via a first pathway 570, a second pathway 572 and a third pathway 574. The second plurality of data paths refer to the first pathway 570, the second pathway 572, and the third pathway 574. A Dual Input Single Output (DISO) device driver 560 is software that drives a first hardware circuitry corresponding to the first pathway 570. The first hardware circuitry corresponding to the first pathway 570 comprises at least a first transceiver that is adapted to transmit and receive data packets over the first pathway 570. In this example, the first pathway 570 is a first wireless path between the access point 500 and a hub or a switch or another access point that belongs to the WiMax network. Data packets flowing via the first pathway 570 obey WiMax protocol. The WiMax network assigns a first IP address to the first pathway 570. The DISO device driver 560 accepts data packets from the MMS 550 via a first input path and a second input path. The DISO device driver 560 is adapted to direct data packets coming via one of the first input path and the second input path to the first hardware circuitry corresponding to the first pathway 570.

The MMS 550 may direct the DISO device driver 560 to collect a first pathway characteristics corresponding to the first pathway 570. The first CRI may comprise IP address assigned by the WiMax network to the first pathway 570 (i.e., the first IP address), delay on the first pathway 570, traffic on the first pathway 570, monetary cost of the first pathway 570, number of hops the first pathway 570 uses etc. The first pathway characteristics change with time. The MMS 550 may direct the DISO device driver 560 to collect the first pathway characteristics periodically. The MMS 550 may receive the first pathway characteristics from the DISO device driver 560 and store the first pathway characteristics in a storage system of the access point 500. The MMS 550 may alternately retrieve the first pathway characteristics from a second storage system as and when required. One or more components of the first pathway characteristics may be factory default values, stored in the storage system of the access point 500.

A Single Input Dual Output (SIDO) device driver 565 is a software that drives a second hardware circuitry corresponding to the second pathway 572 and also drives a third hardware circuitry corresponding to the third pathway 574. The second and the third hardware circuitry comprise respectively at least a second transceiver and a third transceiver, which are adapted to transmit and receive data packets over the second pathway 572 and the third pathway 574 respectively. In this example, the second pathway 572 and the third pathway 574 are respectively a second wireless path and a third wireless path between the access point 500 and the same or a different hub or switch of the WiMax network. The WiMax network assigns a second IP address and a third IP address to the second pathway 572 and the third pathway 574 respectively. The SIDO device driver 565 accepts data packets from the MMS 550 via a single input path and is adapted to direct data packets coming via the single input path to either the second hardware circuitry corresponding to the second pathway 572 or the third hardware circuitry corresponding to the third pathway 574 under supervision of the MMS 550. The MMS 550 may direct the SIDO device driver 565 to collect second pathway characteristics and third pathway characteristics corresponding to the second pathway 572 and the third pathway 574 respectively periodically and forward the second pathway characteristics and the third pathway characteristics to the MMS 550. The MMS 550 may alternately retrieve the second pathway characteristics and the third pathway characteristics from the second storage system as and when required.

In the exemplary case, the MMS 550 is adapted to direct packet data generated by any application running on the client device 500 via a pathway that offers least delay among the first pathway 570, the second pathway 572 and the third pathway 574. For example and without limitation, a video downloading application is running on the client device 500. The video downloading application calls for downloading (receiving) of an archived video file from Internet. The access point 500 is connected to the Internet via the WiMax network. The client device 500 may connect to the WiMax network via any one of the first pathway 570, the second pathway 572 and the third pathway 574. The MMS 550 running on the access point 500 has the first pathway characteristics, the second pathway characteristics and the third pathway characteristics. The MMS 550 uses the first pathway characteristics, the second pathway characteristics and the third pathway characteristics to determine the pathway that offers least delay among the first pathway 570, the second pathway 572 and the third pathway 574. For example, the second pathway 572 offers the least delay. The MMS 550 directs the SIDO device driver 565 to receive data packets corresponding to the archived video file from the Internet via the second pathway 572. The SIDO device driver 565 directs the second hardware corresponding to the second pathway to receive the data packets corresponding to the archived video file from the Internet. The SIDO device driver 565 forwards the received data packets to the MMS 550 and the MMS 550 sends the received data packets to the video downloading application.

For example and without limitation, a Dual Input Dual Output (DIDO) device driver 510 drives a fifth hardware and a sixth hardware corresponding to a dual path 530. A first client device is communicatively connected to the fifth hardware and the sixth hardware of the access point 500 via the dual path 530. The MMS 550 directs the DIDO device driver 510 to collect pathway characteristics corresponding to the dual path 530. The first client device, whenever wants to send or receive data packets from the access point, sends a request to the access point. The MMS 550 in response to the request from the client device selects one path from the dual path 530 using the pathway characteristics corresponding to the dual path 530. The MMS 550 directs the client device to use the selected path from the dual path 530 to send and receive data packets from the access point. The MMS 550 directs the DIDO device driver 510 to use hardware corresponding to the selected path to receive and transmit the data packets to the first client device.

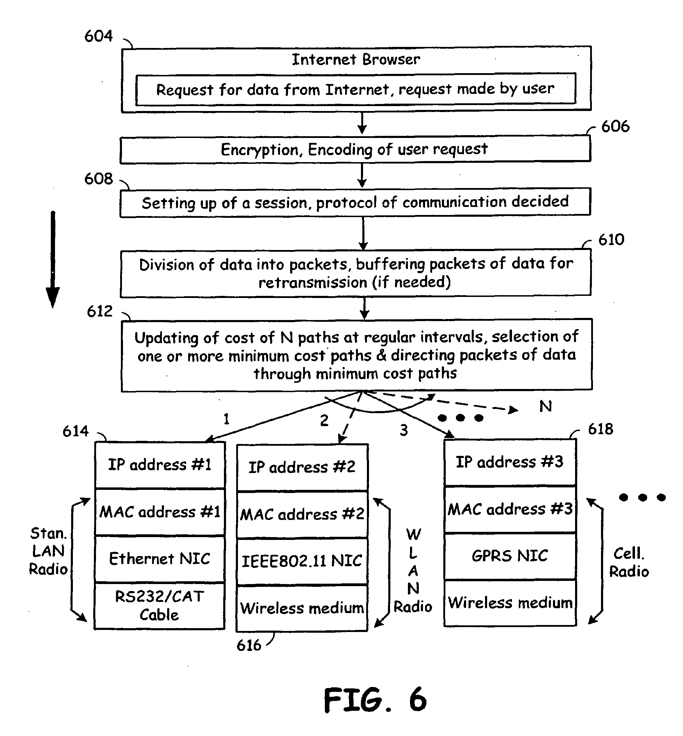

FIG. 6 is a flow chart illustrating functions performed by protocol layers of a computing device that is running a communication application without multi-path management capability and supporting a plurality of pathways between the computing device and Internet. The uppermost protocol layer of the computing device is running an Internet browsing program as shown in block 604. The Internet browsing application does not comprise multi-path management functionality. A user who interacts with the Internet browsing program inputs a user selection. The user selection may identify a web page. The Internet browsing program generates a request data for the selected web page from the Internet. A lower protocol layer encrypts and/or encodes the request data as shown in block 606. Encryption and/or encoding may be performed to save the request data from possible errors during transmission through physical medium. A next lower protocol layer decides upon a communication protocol that will be used by the computing device (i.e., hardware and/or software of the computing device) for transmitting and receiving data information from the Internet as shown in block 608. A further lower protocol layer divides the request data into packets as shown in block 610.

The computing device comprises at least an Ethernet LAN radio, an IEEE 802.11 radio and a GPRS radio. The computing device is connected to the Internet via an Ethernet local area network (LAN), an IEEE 802.11 network and a GPRS network using the Ethernet LAN radio, the IEEE 802.11 radio and the GPRS radio respectively. The Ethernet LAN radio is uniquely identified by a first MAC address as shown in block 614. The IEEE 802.11 radio is uniquely identified by a second MAC address as shown in block 616. The GPRS radio is uniquely identified by a third MAC address as shown in block 618. The computing device is thus communicatively connected to the Internet via at least three communication pathways, a first pathway via the Ethernet LAN radio, a second pathway via the IEEE 802.11 radio and a third pathway via the GPRS radio. A second next lower protocol layer as shown in block 612 calculates cost of each of the plurality of pathways between the computing device and Internet at regular intervals. The cost of each of the plurality of pathways may depend on monetary cost of the corresponding path, data traffic on the corresponding path, delay in the corresponding path, interference present in the corresponding path etc. Parameters on which the cost of each of the plurality of pathways depend change with time. The second next lower protocol layer retrieves the parameters at regular intervals and subsequently calculates and updates the cost of each of the plurality of pathways. The second next lower protocol layer receives the packets containing the request data from the block 610 as shown in step 612. The second next lower protocol layer directs the packets containing the request data via a pathway that offers minimum cost among the plurality of pathways. The packets reach the physical medium (wired or wireless) via the pathway that offers the minimum cost. The packets are embedded with a first IP address if the minimum cost path is the first pathway via the Ethernet LAN radio. The packets are embedded with a second IP address if the minimum cost path is the second pathway via the IEEE 802.11 radio. The packets are embedded with a third IP address if the minimum cost path is the third pathway via the GPRS radio. The packets embedded with an IP address reach the Internet via the selected minimum cost path.

In an embodiment, the second next lower protocol layer after receiving the packets containing the request data from the block 610 directs the packets via more than one pathway. As an example the second next protocol layer selects two pathways from the plurality of pathways. The two selected pathways correspond to two lowest cost pathways from the plurality of pathways. The second next protocol layer may divide the received packets into two groups of equal number of packets and direct a first group of packets through one of the two selected paths and remaining group of packets through other of the two selected paths. The first group of packets reaches the physical medium via the one of the two selected paths and the remaining group of packets reaches the physical medium via the other of the two selected paths. The second next protocol layer may alternately divide the received packets into two groups of unequal number of packets. The second next protocol layer may direct group of more number of packets via the minimum cost path and may direct group of less number of packets via the second minimum cost path.

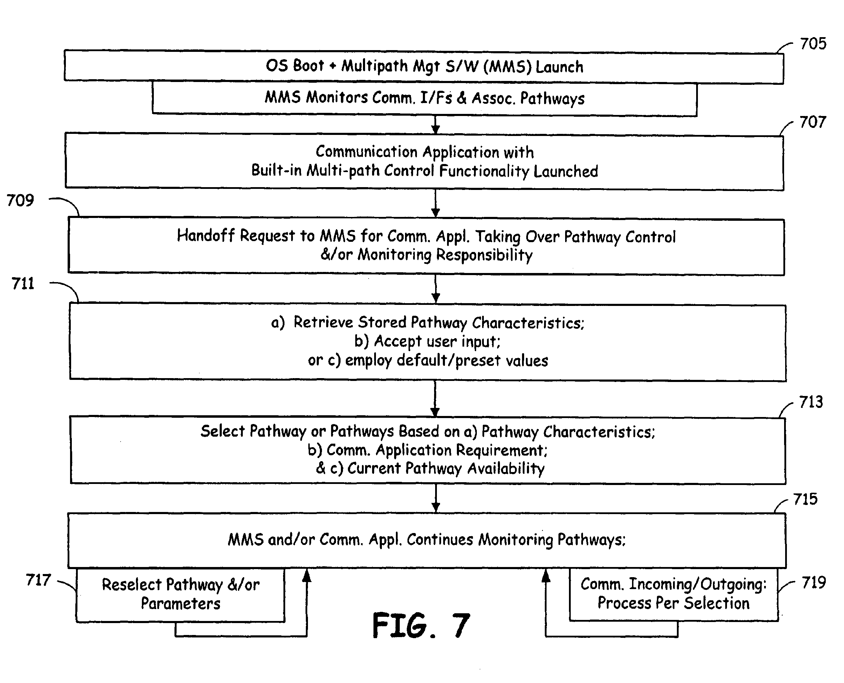

FIG. 7 is a flow chart illustrating a method of managing a plurality of communication pathways between a computing device and at least one packet data network by a communication application that is running on the computing device. The computing device may be a personal computer, a phone, a set top box associated with a television, or any of a variety of devices that is capable of communicating with a packet data network. The at least one packet data network may be a cable network, a fiber optic network, a satellite data network, a WiMax network, an IEEE 802.11 network, an UMTS network, a GPRS network, a CDMA network or any of a variety of standard or proprietary data network that is capable of transporting data fragmented into packets. The data refers to one or more of a video, an audio, a music video, a video game, a voice conversation, a picture, a text message, a television program and any live or archived multimedia information.

The computing device is turned on and an operating system (OS) of the device (for e.g., Windows XP, Linux, UNIX, etc.) starts booting in block 705. The operating system (OS) launches the multi-path management software (MMS) in the block 705. The computing device comprises a plurality of communication interfaces. As the computing device is turned on, the computing device starts associating each of the communication interfaces to at least one packet data network. The computing device may try to associate the communication interfaces to a variety of packet data networks. The computing device may be a personal computer and the personal computer may have a first communication interface, a second communication interface and a third communication interface. The personal computer upon being turned on may associate the first communication interface with a first access point that belongs to the IEEE 802.11 network. A first communication pathway is thus set up between the first communication interface and the first access point that belongs to the IEEE 802.11 network. The personal computer may in addition associate the second communication interface with a second access point that belongs to the WiMax network. A second communication pathway is thus set up between the second communication interface and the second access point that belongs to the WiMax network. The personal computer may associate the third communication interface with a third access point that belongs to the UMTS network. A third communication pathway is thus set up between the third communication interface and the third access point that belongs to the UMTS network. In this example the first, the second and the third communication interfaces are wireless interfaces. One or more of the first, second and the third communication interface may be a wired interface. In such a case the personal computer may associate the wired interface with a wired packet data network. The plurality of communication pathways refer to the first, the second and the third communication pathway. The MMS running on the personal computer manages and monitors the first, the second and the third communication pathway.

The MMS after being launched starts analyzing and monitoring the plurality of communication interfaces of the computing device and the plurality of associated communication pathways as shown in the block 705. In a next step 707, a communication application, is being launched. The communication application has built-in multi-path control functionality. The communication application requests the MMS running on the personal computer (the computing device) to hand off the pathway control and monitoring functionality to the communication application as shown in the block 709. The communication application may be a multimedia file downloading application, a video gaming application, an Internet browsing application, an Internet telephony application, a teleconferencing application or any of a variety of applications that sends and receives packet data between the computing device (the computer) and the Internet. The MMS may grant permission to control and monitor the plurality of communication pathways (the first, the second and the third communication pathway) to the communication application. In another embodiment the MMS may grant permission to control the plurality of pathways to the communication pathway while the MMS continues to monitor the plurality of communication pathways and report health of the plurality of communication pathways to the communication application regularly.

For example and without limitation, the MMS monitors the plurality of communication pathways regularly and hands off the pathway control functionality to the communication application running on the computing device in the block 709. The MMS collects the pathway characteristics from the three communication interfaces (the wired interface, the first wireless interface, the second wireless interface). The pathway characteristics typically refer to cost of the three pathways (the first, the second and the third communication pathway), maximum data rate and bandwidth supported by the three pathways, latency in the three pathways, data traffic on the three pathways etc. The MMS may store the pathway characteristics in a memory of the computing device. The communication application may retrieve the pathway characteristics from the MMS or from the memory as shown in a step 711. The communication application may additionally prompt a user using the computing device to enter user-choice. The communication application uses the user-choice while selecting one or more paths from the three communication pathways for packet data exchange. The communication application may alternately use default or preset values for the communication interfaces. As an example maximum data rate supported by the wired interface may be a preset value and the preset value may be stored in the memory of the computing device. The communication application uses the preset value stored in the memory of the computing device while selecting one or more paths from the three communication pathways for packet data exchange.

In a next step 713 the communication application selects one or more paths from the three communication pathways. The communication application uses the retrieved pathway characteristics to perform the pathway selection. The communication application, as an example, may require at least a minimum data rate communication pathway. The communication application in addition uses the communication application requirement i.e., the required minimum data rate, to perform the pathway selection. For example and without limitation, the communication application calls for a minimum data transfer rate between the computing device and the Internet. The communication application analyzes the three communication pathways and determines that none of the three pathways support the minimum data rate required by the communication application. The communication application determines that the first pathway and the third pathway together support the minimum data rate required by the communication application. The communication application divides data packets generated by the communication application into two portions and directs flow of first portion of the data packets through the first communication interface and directs flow of the second portion of the data packets via the third communication interface. The communication application similarly receives a portion of data packets via the first communication interface and remaining portion of data packets via the third communication interface.

The MMS typically updates the pathway characteristics at regular intervals of time as shown in block 715 because the pathway characteristics typically change with time. The communication application retrieves the pathway characteristics from the MMS at regular intervals. If the MMS in the step 709 hands off the pathway monitoring responsibility to the communication application then the communication application collects the pathway characteristics from the three communication interfaces and/or the three access points at regular intervals as shown in the step 715. The pathway characteristics may change with time and at an instant of time the first pathway may not provide the at least minimum data rate required by the communication application. This may happen due to an increase in traffic in the IEEE 802.11 network at the instance of time or an increase in interference level in the first pathway. The communication application responds to a change in the pathway characteristics by selecting a different pathway and directing flow of data packets over the newly selected pathway. The communication application abandons the first pathway from the instance of time onwards as shown in step 717. The MMS and/or the communication application continue monitoring the three pathways as shown in the step 715.

The operating system of the computing device may launch a second communication application. The second communication application may have a priority level higher than the currently running communication application. The second communication application takes over the communication pathway controlling functionality from the currently running communication application. The second communication application selects pathways from the three pathways using the pathway characteristics, the user-choice and communication requirements of the second communication application and the currently running communication application. The second communication application directs flow of data packets via the selected pathways as shown in step 719. If the second communication application decides to direct data packets corresponding to the currently running communication application via the second communication interface then the second communication application ensures that no data packet is lost while the currently running communication application switches data communication from the first communication interface and the third communication interface to the second communication interface. If the second communication application does not have a priority level higher than the currently running communication application, then the currently running communication application selects which of available communication pathway the second communication application uses. In this exemplary case, the currently running communication application directs all packet data corresponding to the second communication application via the only available second communication pathway.

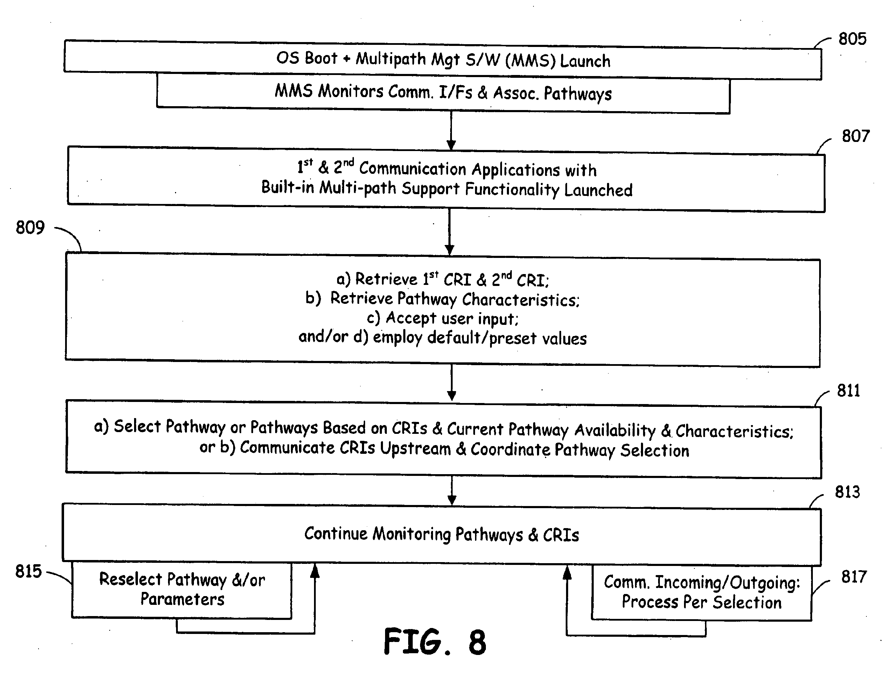

FIG. 8 is a flow chart illustrating a method of managing a plurality of communication pathways between a computing device and at least one packet data network by multi-path management software with support from a communication application, the multi-path management software running on the computing device. The computing device may be a personal computer, a phone, a set top box associated with a television, an access point that belongs to a packet data network or any of a variety of devices that is capable of communicating with a packet data network. The at least one packet data network may be a cable network, a fiber optic network, a satellite data network, a WiMax network, an IEEE 802.11 network, an UMTS network, a GPRS network, a CDMA network or any of a variety of standard or proprietary data network that is capable of transporting data fragmented into packets. The data refers to one or more of a video, an audio, a music video, a video game, a voice conversation, a picture, a text message, a television program and any live or archived multimedia information.

The computing device is turned on and an operating system (OS) of the device (for e.g., Windows XP, Linux, UNIX, etc.) starts booting in block 805. The operating system (OS) launches the multi-path management software (MMS) in the block 805. The computing device comprises a plurality of communication interfaces. As the computing device is turned on, the computing device starts associating each of the communication interfaces to at least one packet data network. If the computing device is an access point then the computing device (the access point) tries to associate with the same packet data network. If the computing device is a client device such as a personal computer, a headset or a phone then the computing device may try to associate the communication interfaces to a variety of packet data networks. The computing device for example may be a personal computer and the personal computer may have a first communication interface, a second communication interface and a third communication interface. The personal computer upon being turned on may associate the first communication interface with a first access point that belongs to the IEEE 802.11 network. A first communication pathway is thus set up between the first communication interface and the first access point that belongs to the IEEE 802.11 network. The personal computer may in addition associate the second communication interface with a second access point that belongs to the WiMax network. A second communication pathway is thus set up between the second communication interface and the second access point that belongs to the WiMax network. The personal computer may associate the third communication interface with a third access point that belongs to the UMTS network. A third communication pathway is thus set up between the third communication interface and the third access point that belongs to the UMTS network. In this example the first, the second and the third communication interfaces are wireless interfaces. One or more of the first, second and the third communication interface may be a wired interface. In such a case the personal computer may associate the wired interface with a wired packet data network. The plurality of communication pathways refer to the first, the second and the third communication pathway. The MMS running on the personal computer manages and monitors the first, the second and the third communication pathway.

The MMS after being launched starts monitoring the plurality of communication interfaces of the computing device and the plurality of associated communication pathways as shown in the block 805. In a next step 807, a first communication application and a second communication application are launched. The first and the second communication applications have built-in multi-path support functionality. The first communication application may require at least a minimum data rate communication pathway. First CRI, i.e., the required minimum data rate, corresponding to the first communication application may be stored in a storage system. The MMS retrieves the first CRI from the storage system or receives the first CRI from the first communication application in a next step 809. If the first CRI is not available in the storage system then the MMS prompts a user to enter first CRI in the step 809. The MMS receives the first CRI entered by the user via a user input interface of the computing device. The user input interface of the computing device may be a keyboard, a mouse, a touch screen, a plurality of buttons etc. If the user does not enter the first CRI in the step 809, then the MMS may use a default or preset value as shown in the step 809. As an example the first communication application may be a web browsing application. A bandwidth value corresponding to a web browsing application may be stored in the storage system of the computing device. Manufacturer of the computing device may set this bandwidth value. The MMS retrieves the preset bandwidth value from the storage device and chooses a communication pathway from the available three communication pathways in a next step 811 such that the selected pathway has a bandwidth equal or more than the preset bandwidth value.

The MMS in the step 809 also receives a second CRI corresponding to the second communication application that is launched in the step 807. The second CRI may comprise a maximum delay the second communication application may withstand and a minimum signal to interference ratio the second communication application may require. If the computing device is an access point, i.e., if the MMS is running not on the personal computer but, for example, on the first access point, then the MMS running on the first access point receives the first CRI corresponding to the first communication application and the second CRI corresponding to the second communication application from the personal computer via the first communication pathway in the step 809.

The MMS in addition retrieves a plurality of pathway characteristics in the step 809. If the MMS is running on a client device such as the personal computer, then the pathway characteristics refer to characteristics of the three communication pathways (the first, the second and the third communication pathway) between the personal computer and the Internet. Characteristic corresponding to a pathway may typically include data load in the pathway, interference in the pathway, cost associated with the pathway etc. If the MMS is running on an access point, for example, the first access point then the pathway characteristics refer to characteristics associated with upstream pathways between the access point and the Internet and also characteristics associated with downstream pathways between the access point and client devices. The first communication pathway between the personal computer and the first access point is one of the downstream pathways of the access point. The pathway characteristics for the first access point include characteristics corresponding to the first pathway. The MMS retrieves the pathway characteristics from relevant communication interfaces, relevant access points or any other nodes of relevant packet data network.

The MMS running on the computing device may operate in one of three possible modes: A) the MMS decides which one or more of the available pathways to be used for sending and/or receiving packet data corresponding to the first communication application and the second communication application. The MMS takes the decision using the first CRI, the second CRI and the pathway characteristics in step 811. The first CRI and the second CRI may be collected directly or indirectly as illustrated in the step 809. B) The MMS may pass on the collected values of the first CRI, the second CRI and the pathway characteristics to the access point or any other nodes of associated packet data networks. The MMS in such a case does not take pathway selection decision as shown in the block 811. C) The MMS running on the computing device jointly performs the pathway selection with one or more MMS running on any other nodes of associated packet data networks. As an example, the MMS running on the personal computer and a second MMS running on server of the IEEE 802.11 network may jointly decide to use the first pathway between the personal computer and the first access point to transmit and receive packet data that belongs to the first communication application.

For example and without limitation, the MMS running on the personal computer is aware that the first communication pathway between the personal computer (the computing device) and the first access point, the second communication pathway between the personal computer and the second access point and the third communication pathway between the personal computer and the third access point are available for transporting data packets to and from Internet. The MMS in the step 611 selects a pathway from the three available communication pathways such that the selected pathway satisfies the first CRI (i.e., the required minimum data rate for the first communication application). There may be more than one pathway that satisfies the first CRI. The MMS may be adapted to select the pathway from the more than one pathway randomly. In the step 811, the MMS directs the personal computer to use the selected pathway for sending and receiving data packets generated or required by the first communication application from the Internet until further instruction from the MMS. The personal computer sends a request for a first web page (in form of data packets) to the Internet via the selected pathway in the step 811. The personal computer receives the requested web page (in form of data packets) from the Internet via the selected pathway.

If the computing device is the first access point, then the MMS running on the first access point finds out if the only pathway between the personal computer and the first access point (i.e. the first communication pathway) satisfies the first CRI in the step 811. If so then the MMS running on the first access point instructs the access point to use the first communication pathway for carrying packet data corresponding to the first communication application.

The MMS running on the personal computer selects another pathway that satisfies the second CRI (i.e., the maximum delay the second communication application withstands and a minimum signal to interference ratio the second communication application requires). In the step 811, the MMS directs the personal computer to use the selected pathway for sending and receiving data packets generated or required by the second communication application from the Internet until further instruction from the MMS.

The MMS running on the computing device (the personal computer or the first access point) monitors the selected pathway and other available communication pathways and the CRIs periodically as shown in step 813. If the pathway used by the first communication application fails to satisfy the first CRI at an instance of time then in a next step 815, the MMS selects a different pathway that satisfies the first CRI from the other available communication pathways and directs the first communication application to use the different pathway for exchange of data packets instead of the earlier pathway until further instruction from the MMS. The MMS continues monitoring all available pathways between the computing device and the Internet periodically as shown in the step 813. The MMS similarly periodically monitors pathway used by the second communication application in the step 813 and directs change of pathway depending on the second CRI and health and/or characteristics of the pathway (for e.g., bandwidth offered by the pathway, delay present in the pathway, data traffic flowing through the pathway etc.) in the step 815. In the step 815 the MMS may direct change of pathway for the second communication application because delay in the pathway might have crossed an upper limit specified in the second CRI.

The computing device may receive a pathway set up request from a third communication application as shown in step 817. Either the first or the second communication application may stop in the step 817. In all these situations the MMS needs to re-evaluate the available communication pathways between the computing device (the personal computer or the access point) and the Internet (or the client device) and may make a new decision one which communication application will be using which communication pathway as illustrated in the step 817.

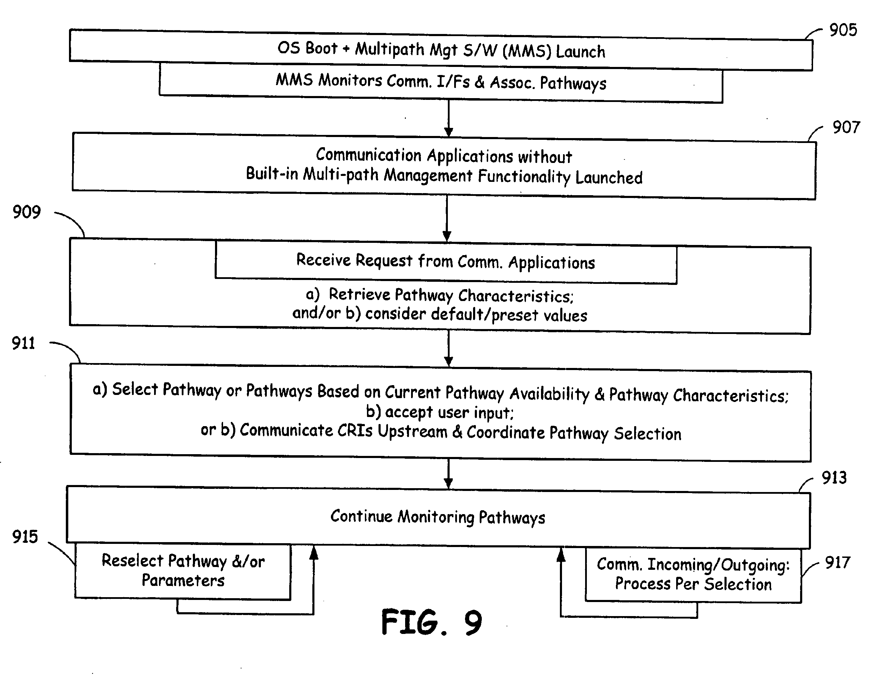

FIG. 9 is a flow chart illustrating a method of independently managing a plurality of communication pathways between a computing device and at least one packet data network by multi-path management software that is running on the computing device. The computing device is turned on and an operating system (OS) of the device starts booting in block 905. The operating system (OS) launches the multi-path management software (MMS) in the block 905. For example and without limitation, the computing device comprises a plurality of communication interfaces and the computing device associates itself with a plurality of packet data networks once it is turned on, one association with a corresponding packet data network via a corresponding communication interface. The MMS running on the computing device manages and monitors the plurality of associations.

In a next step 907 a plurality of communication applications gets launched. The operating system of the computing device may launch the plurality of communication applications as soon as the computing device boots. Typical examples of such communication applications are updating an operating system or updating virus definitions. A user may enter a selection using user input interface of the computing device. The selection may trigger launching of a communication application. Typical examples of such communication applications are phone call application, Internet telephony application, media downloading application etc. In a next step 909, the MMS receives pathway set up request from the plurality of communication applications launched in the step 907. The plurality of communication applications does not have multi-path management capability. The plurality of communication applications neither furnishes any information to the MMS regarding characteristics of the plurality of communication applications.

The MMS responds to the pathway set up request from the plurality of communication interfaces in the step 909 by retrieving a plurality of pathway characteristics. If the MMS is running on a client device such as the personal computer, a phone, a set top box etc., then the pathway characteristics refers to characteristics of the upstream communication pathways between the plurality of interfaces of the computing device and the associated packet data networks. Characteristic corresponding to a pathway may typically include data load in the pathway, interference in the pathway, cost associated with the pathway etc. If the MMS is running on an access point, then the pathway characteristics refer to characteristics associated with upstream pathways between the access point and the Internet and also characteristics associated with downstream pathways between the access point and associated client devices. The MMS retrieves the pathway characteristics from the plurality of communication interfaces, corresponding access points or any other nodes of associated packet data networks.

The MMS may be additionally adapted to look into default or preset values for the plurality of communication interfaces as shown in the step 909. As an example, manufacturer of a wired interface of the computing device may set a maximum data rate that is supported by the wired interface. The MMS in the step 909 may retrieve this preset maximum data rate value from a memory of the computing device. The preset maximum data rate tells the MMS that the MMS is allowed to direct data packets via the wired interface at a rate equal or less than the preset maximum data rate value. An attempt to exchange packet data at a higher rate may lead to loss of data packets or reception of erroneous data packets.

The MMS running on the computing device may operate in one of three possible modes: A) the MMS decides which one or more of the available pathways to be used for sending and/or receiving packet data corresponding to the plurality of communication applications. The MMS takes the decision in step 911 using the pathway characteristics and/or the preset values. B) The MMS may pass on the collected values of the pathway characteristics to the access point or any other nodes of associated packet data networks. The MMS in such a case does not take pathway selection decision as shown in the block 911. C) The MMS running on the computing device jointly performs the pathway selection with one or more MMS running on any other nodes of associated packet data networks.

The MMS after collecting the pathway characteristics may present the pathway characteristics to the user. The MMS may display the pathway characteristics on a screen of the computing device. The user enters a pathway selection after being prompted by the MMS to do so. The MMS may use the user-selected pathways to send and/or receive packet data corresponding to the plurality of communication applications.

The MMS running on the computing device monitors the selected pathway and other available communication pathways periodically as shown in step 913. If the pathway characteristic changes the MMS performs seamless switching from one pathway to another and guarantees that no data packet is lost due to the switching operation as shown in the block 915. If a new communication application is launched then the MMS fmds best pathway from the available idle pathways as shown in block 917. If one or more of the plurality of communication applications stops running then the MMS reevaluates pathway characteristics and may reassign the plurality of pathways among currently running communication applications.

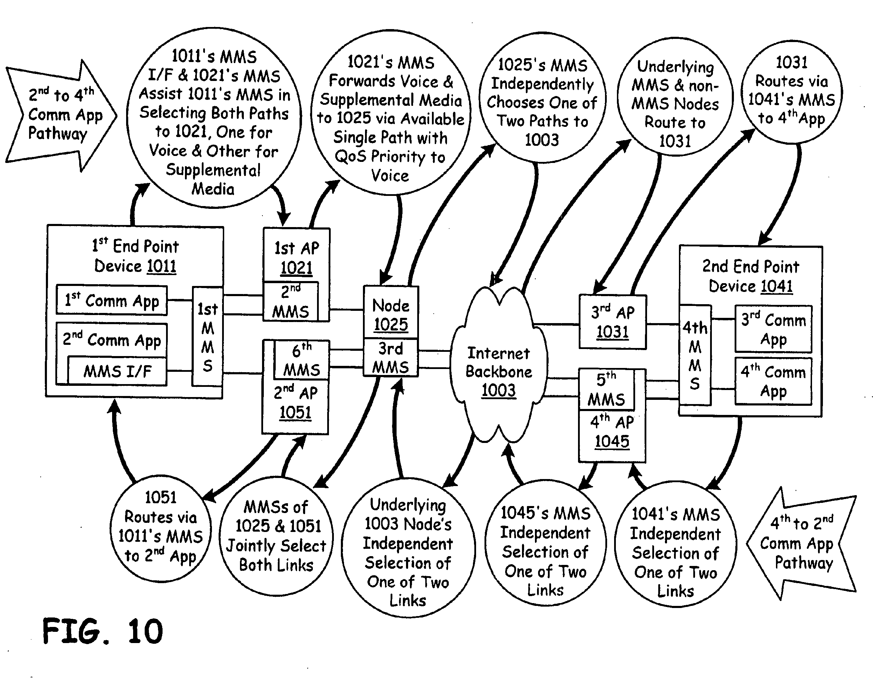

FIG. 10 is a schematic and functional block diagram illustrating exemplary pathway selections made by multi-path management software (MMS) in accordance with the present invention. Communication between a first end point device 1011 and a second end point device 1041 may flow through any selected one or more of a plurality of available pathways supported by a network node 1025, Internet backbone 1003, and a first, second, third and fourth access point (AP) 1021, 1051, 1031, and 1045, respectively. Depending on setup parameters and the nature of the underlying communication application requirements, one or more of the MMS applications running on the first and second end point devices 1011 and 1041, the first, second, third and fourth APs 1021, 1051, 1031, and 1045, and the network node 1025 operate independently or in concert to make the selection.

A first communication application and a second communication application are running on the first end point device 1011, while a third communication application and a fourth communication application run on the second end point device 1041. The end point devices may be client devices and servers. For example, with the first, second, third and fourth communication applications may comprise a video game, Internet telephony application, Internet browsing application, or other communication application that needs a communication pathway to a remote end point device. For example and without limitation, the second communication application running on the first end point device 1011 and the fourth communication application running on the second end point device 1041 might be Internet telephony applications, wherein the first and second end point devices 1011 and 1041 comprise VoIP telephones. As such, the second communication application needs to send to (and receive from) the fourth communication application voice and supplemental media (if any). Alternatively, for example, the second communication application might comprise client game software or client browser software on a client computer that interact with game server software or web server software on a server.

Many communication pathways are available between the second communication application of the first end point device 1011 and the fourth communication application of the second end point device 1041. As illustrated, the second communication application may utilize up to three links to the first and second access points 1021 and 1051. In turn, the access points 1021 and 1051 together have three links to the network node 1025 which itself has two links to the Internet backbone 1003. From the Internet backbone 1003, three links lead to the third and fourth access points 1031 and 1045 which together have three links to the second end point device 1041. Each link may be wireless or wired.

Any single or simultaneous multiple pathways may be selected through selection from among the plurality of links. One or more of the MMS applications on the first and second end point devices 1011 and 1041, the first, second, third and fourth APs 1021, 1051, 1031, and 1045, and the network node 1025 select the one or more pathways. If the communication application, such as the second communication application running on the first end point device, has a software interface to an MMS, the communication application may send requirements information (e.g., bandwidth, QoS, etc.) thereto to assist the MMS in making the pathway selection. Such communication application may also direct or become more active in the pathway selection by the MMS. If a communication application has no specific ability or is not configured to assist or direct an MMS, the MMS will either retrieve preset parameters for such communication application or interact with the user (through pop-up windows, for example) to acquire such parameters and base the pathway selection thereon.

An MMS application running on end point devices can make the entire pathway selection on a link by link basis, or only select, for example, from among the local links. That is, the first MMS of the first end point device 1011 could select the entire pathway from the first end point device 1011 to the second end point device 1041 after retrieving parameters from one or more of: 1) the second communication application; 2) local or remote storage regarding the second communication application; 3) local or remote storage regarding the first communication application; 4) communication characteristics of each local link; and 5) communication characteristics of each remote link from each of the plurality of remote MMS applications. If the parameters of the second communication application are unknown, the first MMS may select a default pathway. Thereafter and no matter how the initial pathway was selected, the first MMS analyzes the traffic flow from the second communication application through the network, and, based on such analysis, may seamlessly switch to another pathway if necessary.

Likewise, the first MMS of the first end point device 1011 could pass control of entire pathway selection or local link selection to the communication application. Alternatively, each MMS may be responsible for only local pathway selections. For example, the first MMS of first end point device 1011 might select to use one of the two illustrated links to the first AP 1021 to support the second communication application, while choosing to use the other of the two links to the first AP 1021 and the link to the second AP 1051 to support the first communication application. The sixth MMS of the second AP 1051 might in turn select one or both of the links to the network node 1025, while the second MMS of the first AP 1021 converges communications from the two incoming links onto the single output link to the network node 1025. In turn, the network node 1025 might split up the incoming flow onto the two outgoing links or choose a single outgoing link to the Internet backbone 1003. Although not shown, the Internet backbone 1003 might have further network nodes that contain MMS applications that make similar link decisions to get to either or both of the third and fourth APs 1031 and 1045 and, in turn, to the second end point device 1041. In this "localized" decision process, the MMS applications on each node may make their selection based on retrieval of parameters from one or more of: 1) the second communication application; 2) local or remote storage regarding the second communication application; 3) local or remote storage regarding the first communication application; 4) communication characteristics of each local link; and 5) underlying communication traffic experienced. Thereafter, each MMS analyzes the traffic flow, and seamlessly switches to other or additional links if necessary.

More specifically, in one exemplary configuration, the second communication application generates a first plurality of voice packets and supplemental media packets for communication to the first MMS. The first end point device 1011 is communicatively coupled to the first access point (AP) 1021 via two (wireless and/or wired) links and communicatively coupled to the second AP 1051 via a single link. The first MMS running on the first end point device 1011 and the second MMS running on the first AP 1021 assist each other in pathway selection and jointly decide to use first of the two pathways and to use second of the two pathways for sending the first plurality of voice packets and the supplemental media packets respectively from the first end point device 1011 to the first access point 1021.

The first AP 1021 is communicatively connected to the network node 1025 via a single link. The second MMS running on the first AP 1021 directs the first plurality of voice packets and the supplemental media packets to the node 1025 via the available single link. The second MMS sets a higher QOS (Quality of Service) limit for the first plurality of voice packets than the first plurality of supplemental media packets. The first AP 1021 (or the second MMS directs the first AP 1021 to send) sends the first plurality of voice packets to the node 1025 only if the single link meets the QOS requirement for the first plurality of voice packets. At an instance of time, the second MMS may not find the single link suitable for carrying the first plurality of voice packets, but suitable for carrying the supplemental media packets. Because of this, the second MMS directs the first AP 1021 to send only the supplemental media packets to the node 1025 via the single link.

The node 1025 is communicatively coupled to the Internet backbone 1003 via two links. The third MMS running on the node 1025 selects one of the two links to the Internet backbone 1003, and sends the first plurality of voice packets and the supplemental media packets received from the first AP 1021 to the Internet backbone 1003 via the selected link. Selection of one of the two available links by the third MMS does on depend on link taken by the data packets and the supplemental media packets to reach the node 1025 from the first end point device 1011. The Internet backbone 1003 consists of a plurality of computing devices, routers, switches, base stations, transceivers, domain name servers, proxy servers, storage servers, for example. One or more of components of the Internet backbone 1003 send the received first plurality of voice packets and the supplemental media packets to a third AP 1031. The third AP 1031 forwards the received first plurality of voice packets and the supplemental media packets to the second end point device 10411041 via the only available communication link. Of course other pathway links may have been selected in replacement or in addition to those mentioned, and the control of such selection could be passed to any single MMS, few MMS's, or the communication application.

Upon analyzing the first plurality of voice packets and the supplemental media packets received from the third AP 1031, the fourth MMS determines that the destination is the fourth communication application of the second end point device 10411041. The fourth MMS responds by forwarding the received first plurality of voice packets and the supplemental media packets to the fourth communication application. In response, the fourth communication application generates a second plurality of voice packets and supplemental media packets. The fourth MMS, in this example, sends the second plurality of voice packets and supplemental media packets to the fourth AP 1045. The second end point device 10411041 is communicatively coupled to the fourth AP 1045 via two links. The fourth MMS selects one or both of the two links and sends the second plurality of voice packets and supplemental media packets there through.

Selection of one or more of the two links by the fourth MMS for the response need not be the same as that of the incoming voice packets and supplemental media from the second communication application. The fourth MMS may however consider the bandwidth utilization of such incoming information in deciding to choose a different link for outgoing information. In the example, the fourth MMS receives the first plurality of voice packets from the Internet backbone 1003 via the third AP 1031, and sends the second plurality of voice packets to the Internet backbone 1003 via the fourth AP 1045. Alternately, the fourth MMS may send the second plurality of voice packets and the supplemental media packets to the Internet backbone 1003 via the third AP 1031.

The fifth MMS is running on a fourth AP 1045. The fifth MMS forwards the second plurality of voice packets and the supplemental media packets received from the second end point device 10411041 to the Internet backbone 1003. The Internet backbone 1003 is communicatively coupled to the node 1025 via the two links. The third MMS running on the node 1025 selects one of the two links for receiving the second plurality of voice packets and the supplemental media packets from the Internet backbone 1003 and informs the Internet backbone 1003 about the selection. The selected pathway may be same or different from the pathway the node 1025 uses to send the first plurality of voice packets and the supplemental media packets to the Internet backbone 1003. The Internet backbone 1003 forwards the second plurality of voice packets and supplemental media packets received from the fourth AP 10411041 to the node 1025 via the selected link.

The third MMS running on the node 1025 and the sixth MMS running on a second AP 1051 jointly select two links between the node 1025 and the second AP 1051 to carry the second plurality of voice packets and the supplemental media packets from the node 1025 to the second AP 1051. One of the two selected links carries the second plurality of voice packets and a second of the two selected links carries the second plurality of supplemental media packets. In an alternate configuration, the third MMS running on the node 1025 and the second MMS running on the first AP 1021 may jointly decide to carry the second plurality of voice packets and the supplemental media packets via the first AP 1025. The third MMS performs link selection twice during full duplex communication between the second communication application and the fourth communication application, once for the first plurality of voice packets and supplemental media packets and a second time for the second plurality of voice packets and the supplemental media packets.

The second AP 1051 forwards the received second plurality of voice packets and the supplemental media packets to the first end point device 1011. The first MMS running on the first end point device 1011 analyzes the second plurality of plurality of voice packets and the supplemental media packets and forwards them to the second application running on the end point device 1011.

To support the first or any other communication application, the first MMS of the first end point device 1011 either: 1) prompts the user to enter default parameters for the first communication application (pop-up asking if the first communication application is for streaming video, streaming audio, voice call, video call, file delivery, Internet browsing, text chat exchange, etc.); 2) retrieves a preset configuration from a remote server; 3) retrieves a preset configuration from local memory; 4) retrieves preset configuration from an MMS interface if available; or 5) uses a default configuration. This configuration consists of a plurality of parameters relating to: a) the general communication requirements from and to the communication application; b) media types exchanged; and c) control configuration (e.g., communication application joint or sole control, local MMS link selections/control; single MMS full pathway selection/control, etc.).

The end point devices 1011 and 10411041 are network nodes. The access points 1021, 1031, 10411041 and 1051, the network node 1025, and various nodes within the Internet backbone 1003 (not shown) are all supporting network nodes. Each node, of course, may or may not employ an MMS application, and, either way, the full pathway adapts in accommodation.

As one of average skill in the art will appreciate, the term "communicatively coupled", as may be used herein, includes wireless and wired, direct coupling and indirect coupling via another component, element, circuit, or module. As one of average skill in the art will also appreciate, inferred coupling (i.e., where one element is coupled to another element by inference) includes wireless and wired, direct and indirect coupling between two elements in the same manner as "communicatively coupled".

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

The present invention has been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention.

One of average skill in the art will also recognize that the functional building blocks, and other illustrative blocks, modules and components herein, can be implemented as illustrated or by discrete components, application specific integrated circuits, processors executing appropriate software and the like or any combination thereof.
Moreover, although described in detail for purposes of clarity and understanding by way of the aforementioned embodiments, the present invention is not limited to such embodiments. It will be obvious to one of average skill in the art that various changes and modifications may be practiced within the scope of the invention, as limited only by the scope of the appended claims.

## Claims

1. A communication infrastructure comprising:
a local communication software application supporting multimedia packet data and having a local communication requirement, the local communication requirement of the local communication software application comprising one or more of minimum data rate, maximum allowed delay, desired link quality, minimum link quality, security/encryption requirements, associated standards supported, priority level, maximum error rate, data type, volume of data, and type of temporal communication demands, the type of temporal communication demands including periodic, spontaneous and continuous;
a local management software application;
a local end point device (151, 153, 155, 157, 159, 1011) adapted to execute the local communication software application and the local management software application, the local end point device including a plurality of communication interfaces (342, 343, 344, 345);
a remote end point device (151, 153, 155, 157, 159, 1041) adapted to execute a remote communication software application, the remote endpoint device having a remote communication characteristic, the remote communication characteristic comprising a remote communication requirement associated with the remote communication software application and remote pathway characteristics associated with links coupled to the remote endpoint device;
a plurality of local access point devices (131, 133, 135, 137, 1021, 1051, 1031, 1045) communicatively coupled to the local end point device via a corresponding plurality of independent links, the corresponding plurality of independent links having a corresponding plurality of local pathway characteristics;
a packet switched communication backbone (103, 1003) communicatively coupled with each of the plurality of access point devices and the remote end point device;
the local end point device further adapted to communicate through at least one of the plurality of local access points to reach with the remote end point device via the packet switched communication backbone;
the local end point device further adapted to select the at least one of the plurality of local access points after considering the local communication requirement, the remote communication characteristic, and the corresponding plurality of local pathway characteristics;
the local end point device further adapted to select a first communication pathway via the at least one of the plurality of local access points and a first communication interface of the plurality of communication interfaces to service a first portion of the multimedia packet data and a second communication pathway via a second local access point and a second communication interface of the plurality of communication interfaces to service a second portion of the multimedia packet data; and
the local end point device further adapted to execute a second local communication software application, the local communication software application having a first priority and the second local communication software application having a second priority, and wherein the communication software application of the local end point device having the highest priority controls the selection of the at least one of the plurality of local access points.

2. The communication infrastructure of claim 1, further comprising a remote management software application adapted to run on the remote end point device and direct the delivery of the remote communication characteristic to the local end point device.

3. The communication infrastructure of claim 1, wherein the local communication software application is adapted to deliver the local communication requirement to the local management application.

4. The communication infrastructure of claim 1, wherein the local management software application is adapted to direct the selection by the local end point device of the at least one of the plurality of local access points.

5. The communication infrastructure of claim 1, wherein the local management software application is adapted to retrieve the local communication requirement from storage.

## Patentansprüche

1. Kommunikationsinfrastruktur mit:
- einer Multimedia-Paketdaten unterstützenden lokalen Kommunikations-Softwareanwendung mit einer lokalen Kommunikationsanforderung, wobei die lokale Kommunikationsanforderung der lokalen Kommunikations-Softwareanwendung eine minimale Datenrate, eine maximal zulässige Verzögerung, eine gewünschte Verbindungsqualität, eine minimale Verbindungsqualität, Sicherheits-/Verschlüsselungsanforderungen, unterstützte zugeordnete Standards, eine Prioritätsebene, eine maximale Fehlerrate, einen Datentyp, einen Datenumfang und/oder eine Art temporärer Kommunikationserfordernisse umfasst, wobei die Art temporärer Kommunikationserfordernisse periodische, spontane und kontinuierliche Erfordernisse umfasst,
- einer lokalen Management-Softwareanwendung,
- einer lokalen Endpunkteinrichtung (151, 153, 155, 157, 159, 1011), die dafür ausgelegt ist, die lokale Kommunikations-Softwareanwendung und die lokale Management-Softwareanwendung auszuführen, wobei die lokale Endpunkteinrichtung eine Mehrzahl Kommunikationsschnittstellen (342, 343, 344, 345) umfasst,
- einer entfernten Endpunkteinrichtung (151, 153, 155, 157, 159, 1041), die dafür ausgelegt ist, eine entfernte Kommunikations-Softwareanwendung auszuführen, wobei die entfernte Endpunkteinrichtung eine entfernte Kommunikationscharakteristik aufweist, und wobei die entfernte Kommunikationscharakteristik eine entfernte Kommunikationsanforderung, die der entfernten Kommunikations-Softwareanwendung zugeordnet ist, und entfernte Pfadcharakteristika umfasst, die mit der entfernten Endpunkteinrichtung gekoppelten Verbindungen zugeordnet sind,
- einer Mehrzahl lokaler Zugriffspunkteinrichtungen (131, 133, 135, 137, 1021, 1051, 1031, 1045), die über eine entsprechende Mehrzahl unabhängiger Verbindungen kommunikationsfähig mit der lokalen Endpunkteinrichtung gekoppelt sind, wobei die entsprechende Mehrzahl unabhängiger Verbindungen eine entsprechende Mehrzahl lokaler Pfadcharakteristika aufweist,
- einem paketvermittelten Kommunikations-Backbone (103, 1003), das mit jedem der Mehrzahl Zugriffspunkteinrichtungen und der entfernten Endpunkteinrichtung kommunikationsfähig gekoppelt ist,
- wobei die lokale Endpunkteinrichtung ferner dafür ausgelegt ist, über mindestens einen der Mehrzahl lokaler Zugriffspunkte zu kommunizieren, um die entfernte Endpunkteinrichtung über das paketvermittelte Kommunikations-Backbone zu erreichen,
- wobei die lokale Endpunkteinrichtung ferner dafür ausgelegt ist, den zumindest einen der Mehrzahl lokaler Zugriffspunkte nach Berücksichtigung der lokalen Kommunikationsanforderung, der entfernten Kommunikationscharakteristik und der entsprechenden Mehrzahl lokaler Pfadcharakteristika auszuwählen,
- wobei die lokale Endpunkteinrichtung ferner dafür ausgelegt ist, einen ersten Kommunikationspfad über den zumindest einen der Mehrzahl lokaler Zugriffspunkte und eine erste Kommunikationsschnittstelle der Mehrzahl Kommunikationsschnittstellen auszuwählen, um einen ersten Teil der Multimedia-Paketdaten zu bedienen, und einen zweiten Kommunikationspfad über einen zweiten lokalen Zugriffspunkt und eine zweite Kommunikationsschnittstelle der Mehrzahl Kommunikationsschnittstellen auszuwählen, um einen zweiten Teil der Multimedia-Paketdaten zu bedienen, und
- wobei die lokale Endpunkteinrichtung ferner dafür ausgelegt ist, eine zweite lokale Kommunikations-Softwareanwendung auszuführen, wobei die lokale Kommunikations-Softwareanwendung eine erste Priorität und die zweite lokale Kommunikations-Softwareanwendung eine zweite Priorität aufweist, und wobei die Kommunikations-Softwareanwendung der lokalen Endpunkteinrichtung mit der höchsten Priorität die Auswahl des zumindest einen der Mehrzahl lokaler Zugriffspunkte steuert.

2. Kommunikationsinfrastruktur nach Anspruch 1,
die ferner eine entfernte Management-Softwareanwendung umfasst, die dafür ausgelegt ist, auf der entfernten Endpunkteinrichtung zu laufen und die Zuführung der entfernten Kommunikationscharakteristik an die lokale Endpunkteinrichtung zu steuern.

3. Kommunikationsinfrastruktur nach Anspruch 1,
wobei die lokale Kommunikations-Softwareanwendung dafür ausgelegt ist, die lokale Kommunikationsanforderung der lokalen Management-Anwendung zuzuführen.

4. Kommunikationsinfrastruktur nach Anspruch 1,
wobei die lokale Management-Softwareanwendung dafür ausgelegt ist, die Auswahl des zumindest einen der Mehrzahl lokaler Zugriffspunkte durch die lokale Endpunkteinrichtung zu steuern.

5. Kommunikationsinfrastruktur nach Anspruch 1,
wobei die lokale Management-Softwareanwendung dafür ausgelegt ist, die lokale Kommunikationsanforderung aus dem Speicher abzurufen.

## Revendications

1. Infrastructure de communication comprenant :
une application logicielle de communication locale supportant des données multimédia en paquets et ayant une exigence de communication locale, l'exigence de communication locale de l'application logicielle de communication locale comprenant un ou plusieurs d'un débit minimum de données, d'un retard maximum autorisé, d'une qualité désirée de liaison, d'une qualité minimum de liaison, d'exigences de sécurité/cryptage, de normes associées supportées, d'un niveau de priorité, d'un taux maximum d'erreurs, d'un type de données, d'un volume de données, et d'un type de demandes temporelles de communication, le type de demandes temporelles de communication incluant périodique, spontané et continu ;
une application logicielle de gestion locale ;
un dispositif de point d'extrémité local (151, 153, 155, 157, 159, 1011 ) adapté à exécuter l'application logicielle de communication locale et l'application logicielle de gestion locale, le dispositif de point d'extrémité local incluant une pluralité d'interfaces de communication (342, 343, 344, 345) ;
un dispositif de point d'extrémité distant (151, 153, 155, 157, 159, 1041) adapté à exécuter une application logicielle de communication distante, le dispositif de point d'extrémité distant ayant une caractéristique de communication distante, la caractéristique de communication distante comprenant une exigence de communication distante associée avec l'application logicielle de communication distante et une caractéristique de voie distante associée avec des liaisons couplées au dispositif de point d'extrémité distant;
une pluralité de dispositifs de point d'accès locaux (131, 133, 135, 137, 1021, 1051, 1031, 1045) couplés en communication au dispositif de point d'extrémité local par l'intermédiaire d'une pluralité correspondante de liaisons indépendantes, la pluralité correspondante de liaisons indépendantes ayant une pluralité correspondante de caractéristiques de voies locales ;
une dorsale de communication par commutation de paquets (103, 1003) couplée en communication avec chacun de la pluralité de dispositifs de point d'accès et le dispositif de point d'extrémité distant ;
le dispositif de point d'extrémité local adapté en outre à communiquer par l'intermédiaire d'au moins un de la pluralité de points d'accès locaux pour atteindre le dispositif de point d'extrémité distant par l'intermédiaire de la dorsale de communication par commutation de paquets ;
le dispositif de point d'extrémité local adapté en outre à sélectionner l'au moins un de la pluralité de points d'accès locaux après prise en compte de l'exigence de communication locale, de la caractéristique de communication distante, et de la pluralité correspondante de caractéristiques de voies locales ;
le dispositif de point d'extrémité local adapté en outre à sélectionner une première voie de communication par l'intermédiaire de l'au moins un de la pluralité de points d'accès locaux et d'une première interface de communication de la pluralité d'interfaces de communication pour desservir une première partie des données multimédia en paquets et une deuxième voie de communication par l'intermédiaire d'un deuxième point d'accès local et d'une deuxième interface de communication de la pluralité d'interfaces de communication pour desservir une deuxième partie des données multimédia en paquets ; et
le dispositif de point d'extrémité local adapté en outre à exécuter une deuxième application logicielle de communication locale, l'application logicielle de communication locale ayant une première priorité et la deuxième application logicielle de communication locale ayant une deuxième priorité, et dans lequel l'application logicielle de communication du dispositif de point d'extrémité local ayant la priorité la plus haute contrôle la sélection de l'au moins un de la pluralité de points d'accès locaux.

2. Infrastructure de communication selon la revendication 1, comprenant en outre une application logicielle de gestion distante adaptée à tourner sur le dispositif de point d'extrémité distant et à diriger la délivrance de la caractéristique de communication distante au dispositif de point d'extrémité local.

3. Infrastructure de communication selon la revendication 1, dans lequel l'application logicielle de communication locale est adaptée à délivrer l'exigence de communication locale à l'application de gestion locale.

4. Infrastructure de communication selon la revendication 1, dans lequel l'application logicielle de gestion locale est adaptée à diriger la sélection par le dispositif de point d'extrémité local de l'au moins un de la pluralité de points d'accès locaux.

5. Infrastructure de communication selon la revendication 1, dans lequel l'application logicielle de gestion locale est adaptée à récupérer l'exigence de communication locale dans un stockage.
